# NEUE EUROPÄISCHE PATENTSCHRIFT

(11) **EP 1 874 874 B2**
(45) Veröffentlichungstag und Bekanntmachung des Hinweises auf die Entscheidung über den Einspruch: **23.05.2012**
(45) Hinweis auf die Patenterteilung: 19.11.2008
(21) Anmeldenummer: 07722891.4
(22) Anmeldetag: 22.02.2007
(51) Int. Cl.: C09C 1/00, C09B 67/08

(54) **MIT ANORGANISCH/ORGANISCHEN MISCHSCHICHTEN BESCHICHTETE PERLGLANZPIGMENTE UND VERFAHREN ZU DEREN HERSTELLUNG**
PEARLESCENT PIGMENTS COATED WITH MIXED INORGANIC/ORGANIC LAYERS AND METHOD FOR THE PRODUCTION THEREOF
PIGMENTS DE LUSTRE PERLAIRE REVETUS DE COUCHES MIXTES INORGANIQUES/ORGANIQUES ET LEUR PROCEDE DE PRODUCTION

(30) Priorität: 24.02.2006 DE 102006009131
(43) Veröffentlichungstag der Anmeldung: 09.01.2008
(73) Patentinhaber: Eckart GmbH, 91235 Hartenstein (DE)
(72) Erfinder: HENGLEIN, Frank, 90409 Nürnberg (DE); TRUMMER, Stefan, 90480 Nürnberg (DE); SCHMIDT, Ulrich, 91217 Hersbruck (DE); KRÜGER, Peter, 91207 Lauf (DE); KAUPP, Günter, 91284 Neuhaus (DE)
(74) Vertreter: Walcher, Armin
(86) Internationale Anmeldenummer: PCT/EP2007/001515
(87) Internationale Veröffentlichungsnummer: WO 2007/098878

(56) Entgegenhaltungen:
- EP-A1- 0 632 109
- EP-A2- 0 477 433
- WO-A-2004/092284
- WO-A1-99/57204
- DE-A1- 19 639 783
- US-A- 5 759 255
- G.PFAFF: "Perlglanzpigmente" CHEM.I.U.ZEIT, Bd. 31, Nr. 1, 1997, Seiten 6-16, XP002447405

## Beschreibung

Die Erfindung betrifft plättchenförmige Perlglanzpigmente, die zur Verbesserung ihrer anwendungstechnischen und hier insbesondere ihrer mechanischen Eigenschaften, mit wenigstens einer anorganisch/organischen Mischschicht beschichtet sind sowie Verfahren zu deren Herstellung und deren Verwendung. Diese anorganisch/organische Mischschicht besteht aus mindestens einer wenigstens teilweise vernetzten anorganischen Metalloxid-Komponente und einer organischen Komponente. Diese ist mindestens ein organisches Oligomer und/oder Polymer, welches wenigstens teilweise mit dem anorganischen Netzwerk über Netzwerkbildner kovalent verknüpft ist.

Perlglanzpigmente bestehen aus einem plättchenförmigen Substrat niedriger Brechzahl, wie beispielsweise Glimmer und einem oder mehrer hochbrechenden Oxidschichten. Hier sind Titandioxid und Eisenoxide am häufigsten verbreitet. Die optische Wirkung von Perlglanzpigmenten beruht auf Interferenzeffekten und ihrer plättchenförmigen Struktur: diese führt zu einer Orientierung im Anwendungsmedium parallel zum Untergrund. Die lamellenförmige Struktur der orientierten Perlglanzpigmente wiederum bewirkt die effektgebenden Eigenschaften wie beispielsweise das Wahrnehmen von Interferenzfarben und einen Farbflop. Der spezifische optische Effekt wird ganz wesentlich durch Art und Dicke der Oxidschicht sowie durch die Korngröße und Korngrößenverteilung der Perlglanzpigmente bestimmt. Gerade jedoch aufgrund ihrer plättchenförmigen Struktur sind Perlglanzpigmente empfindlich gegenüber dem Einfluß von mechanischen Kräften, insbesondere Scherkräften. Durch zu starke Scherungen können die hochbrechenden Oxidbeschichtungen auf dem Substrat durch Bruch geschädigt werden, wodurch die effektgebenden Eigenschaften beeinträchtigt werden. Dies äußert sich beispielsweise in Anfälligkeiten gegenüber dem Einarbeiten von Perglanzpigmenten in Kunststoffen oder der generellen Notwendigkeit, Perlglanzpigmente - im Gegensatz zu gewöhnlichen farbigen Pigmenten - einer schonenden Einarbeitung in Naßlacke zu unterwerfen. Beim Einarbeiten in Kunststoffen werden Perlglanzpigmente in einer Kunststoffschmelze extrudiert. Abplatzungen der Oxidbeschichtungen führen zu einer verminderten Transparenz des eingefärbten Kunststoffes und zu vermindertem Glanz.

Auch können Perlglanzpigmente nicht wie Buntpigmente durch Extrusion und anschließender Mahlung in einer Stiftmühle in den Grundlack eines Pulverlackes eingearbeitet werden. Hier werden sie in der Regel derart zerkleinert, daß die charakteristischen optischen Effekte praktisch vollständig verloren gehen.

Ein weiterer kritischer Punkt betrifft die Wetterbeständigkeit von Perlglanzpigmenten. Aufgrund der photokatalytischen Wirkung von Titandioxid wird beispielsweise in Automobillacken das Bindemittel des Decklackes abgebaut. Daher müssen mit Titandioxid beschichtete Perlglanzpigmente mit geeigneten Schutzschichten versehen werden. Schutzschichten die jedoch zugleich die mechanischen Eigenschaften des Pigmentes verbessern, sind in einfacher Weise bisher noch nicht in einfacher Weise zugänglich.

Seit längerer Zeit werden daher Perlglanzpigmente mit rein anorganischen oder mit rein organischen dreidimensional vernetzten Beschichtungen versehen. Diese Beschichtungen dienen in der Regel als Schutzschichten haben oft aber auch eine mechanisch stabilisierende Wirkung. Zudem können Perlglanzpigmente, die im Pulverlack eingesetzt werden, durch derartige dielektrische Beschichtungen in geeigneter Weise elektrostatisch aufladbar gemacht werden.

Die vorteilhaften Eigenschaften der rein anorganischen oder rein organischen dreidimensional vernetzten Beschichtungen von Perlglanzpigmenten, sind zu unterscheiden von verschiedenen Oberflächenbehandlungen. Derartige Oberflächenbehandlungen zielen immer auf die Verbesserung von anwendungstechnischen Eigenschaften, die von der Oberflächenchemie der Perlglanzpigmente beeinflußt werden.

So ist eine organische Oberflächenmodifizierung von beispielsweise anorganischen Beschichtungen von Perlglanzpigmenten bisher nur in Form einer Oberflächen-modifizierung vorgenommen worden. In der DE 198 20 112 A1 werden reaktive organische Orientierungsmittel beschrieben, die mit einer funktionellen Gruppe auf der Oberfläche eines Perlglanzpigmentes chemisch anbinden und mit einer anderen funktionellen Gruppe an den Lack anbinden können. Die organischen Orientierungs-mittel werden auf Perlglanzpigmente, die mit anorganischen Oxidschichten oder organischen Polymerschichen versehen sind, aufgebracht. Gemäß der Lehre der DE 198 20 112 A1 wird jedoch keine Mischschicht aus einem anorganischen Oxid/Hydroxid und einem organischen Oligomer und/oder Polymer aufgebaut. Das verwendete organische Orientierungsmittel verändert lediglich die Oberflächen-eigenschaften des Perlglanzpigmentes. Dabei wird im wesentlichen eine möglichst optimale Anbindung des Pigmentes an das Bindemittel des Lackes angestrebt. Hierdurch werden die für den optischen Effekt ganz wesentliche Orientierung der plättchenförmigen Perlglanzpigmente im Lack sowie weitere anwendungstechnische Eigenschaften wie beispielsweise die Schwitzwasserbeständigkeit und die Dispergierbarkeit im Lacksystem in günstiger Weise beeinflusst.

In der DE 196 39 783 A1 werden modifizierte Perlglanzpigmente auf der Basis eines mit Metalloxiden beschichteten, plättchenförmigen Substrates beschrieben, das auf der obersten Metalloxidschicht eine Deckschicht aus mindestens zwei Oxiden, gemischten Oxiden oder Mischoxiden von Siliciumdioxid, Aluminumoxid, Ceroxid, Titanoxid oder Zirkoniumoxid und einem wasserbasierenden oligomeren Silansystem enthält.

Unter einem oligomeren Silansystem wird hier ein System verschiedener organofunktioneller Silane, die über die anorganischen -Si-O-Si-Einheiten miteinander verknüpft sind, verstanden. Nicht beschrieben sind jedoch Oligomere, bei dem die organischen Funktionen der Silane miteinander kovalent verknüpft sind. Somit wird mit derartigen Silansystemen kein organisches Oligomer- und/oder Polymernetzwerk aufgebaut.

In der EP 632 109 B1 wird eine aus wenigstens drei Schichten bestehende Beschichtung eines Perlglanzpigments beschrieben. Die erste Schicht besteht aus SiO₂. Die zweite Schicht besteht aus mindestens einem Hydroxid bzw. Oxidhdrat der Elemente Cer, Aluminium oder Zirkon. Die dritte Schicht besteht aus einem oder mehreren Oxiden/Hydroxiden der Elemente Ce, Al oder Zr und einem organischen Kupplungsreagenz. Als Kupplungsreagenz werden u. a. organisch modifizierte Silane genannt. Derartige Beschichtungen ergeben wetterechte Perlglanzpigmente mit verbesserten anwendungstechnischen Eigenschaften. Aus den EP -A-0 268 918 und EP-A-0 342 533 geht hervor, daß die Wetterechtheit, d.h. die Unterdrückung der Photoaktivität der Titandioxid-Schicht, dabei ganz wesentlich durch die Auffällung von Oxide/Hydroxiden der Elemente Ce, Al oder Zr bewirkt wird.

Die in der DE 196 39 783 A1 und der EP 632 109 B1 zusätzlich beschriebene Beschichtungen fungieren als eine Oberflächenmodifizierung. Durch diese Oberflächenmodifizierung sollen anwendungstechnische Vorteile wie einerseits verbesserte Rieselfähigkeit und andererseits sehr gute Dispergierbarkeit, Koloristik, geringere Mikroblasenbildung, Glanz und Stabilität in wasserverdünnbaren Lacksystemen erhalten werden.

Nicht beschrieben sind jedoch Mischschichtfällungen, bei denen die organische Komponente untereinander oligomerisiert/polymerisiert und so zum Aufbau eines organischen Netzwerkes innerhalb des anorganischen Netzwerkes führt.

Perlglanzpigmente können durch eine Beschichtung mit SiO₂ oder anderen anorganischen Stoffen in vielfältigster Weise in ihren anwendungstechnischen Eigenschaften verbessert und dadurch für unterschiedlichsten Anwendungen angepasst werden. Nachteilig ist jedoch die bei diesen rein anorganischen Beschichtungen naturgemäß vorhandene Sprödigkeit. Es stellte sich heraus, daß bei starker mechanischer Beanspruchung diese Schichten beschädigt werden können, was zu einem Verlust der gewünschten Eigenschaften führt.

Mechanische Beschädigungen der Schutzschicht können ebenfalls bei einer zu heftigen Dispergierung von Perlglanzpigmenten in einem Lack bzw. beim Dispergieren von Perlglanzpigmenten in Extrudern für Anwendungen in Kunststoffen auftreten.

So sind insbesondere bei der Verwendung von Perlglanzpigmenten in harten Kunststoffen wie z.B. Polycarbonat häufig optische Einbußen aufgrund von mechanischen Beschädigungen der Perlglanzpigmente zu finden.

In der EP 515602 (vgl. DE 4039593) werden oberflächenmodifizierte plättchenförmige Substrate beschrieben, bei denen organische Aluminium- und/oder organische Siliziumverbindungen unter gezieltem Einfluss von Feuchtigkeit oder Hitze auf den Partikeln verankert werden. Eine Vernetzung der organischen Komponenten nach der Abscheidung auf der Pigmentoberfläche wird nicht beschrieben. Nach diesem Verfahren behandelte Eisenoxidperlglanzpigmente sollen einen größeren Schutz gegen Abrieb aufweisen. Demgegenüber wird in der EP 1203794 erwähnt, dass insbesondere Eisen(III)oxid beschichtete Perlglanzpigmente auf Glimmerbasis trotz einer stabilisierenden, aus insgesamt 3 Schichten bestehenden Nachbeschichtung, die in der EP 0632109 ausführlich beschrieben wird, in Anwendungsbereichen mit hoher Beanspruchung nicht bzw. nur bedingt einsatzfähig sind. Gemäß der Lehre der EP 1203794 kann eine mechanische Stabilität in einem sehr komplexen Verfahren erst durch die Abscheidung einer zusätzlichen, haftvermittelnden vierten Schicht verbessert werden.

Aufgabe der vorliegenden Erfindung ist die Bereitstellung von Perlglanzpigmenten mit verbesserten mechanischen Eigenschaften. Die Perlglanzpigmente sollen auch nach dem Einwirken von starken Scherkräften gute optische Eigenschaften im Anwendungsmedium aufweisen. Ferner sollen die Perlglanzpigmente eine Schutzschicht aufweisen, die insbesondere Wetterstabilität ermöglicht.

Die der Erfindung zugrunde liegende Aufgabe(n) wird durch ein Perlglanzpigment gemäß Anspruch 1 gelöst. Bevorzugte Weiterbildungen sind in den Unteransprüchen 2 - 17 angegeben. Die Aufgabe wird weiterhin durch ein Verfahren gemäß Anspruch 18 gelöst. In den Unteransprüchen 19 - 37 sind bevorzugte Weiterbildungen des erfindungsgemäßen Verfahrens angegeben.

Der wenigstens eine anorganische Netzwerkbildner, der wenigstens eine organische Netzwerkbildner und die wenigstens eine reaktive organische Komponente können in beliebiger Reihenfolge miteinander vermengt werden. Die Reaktionsbedingungen sind jedoch so einzustellen, dass eine Umsetzung zwischen den Komponenten erfolgen kann. Vorzugsweise erfolgt die Umsetzung durch Hydrolyse und/oder Kondensation der Komponenten untereinander. Die Komponenten sind mithin hydrolysierbar und/oder kondensierbar. Die sich bei der Hydrolyse und/oder Kondensation bildende Beschichtungszusammensetzung wird dann auf die Perlglanzpigmentoberfläche, vorzugsweise durch Fällung, aufgebracht.

Die Perlglanzpigmente können vor, während oder nach dem Zugeben oder Umsetzen des wenigstens einen anorganischen Netzwerkbildners und des wenigstens einen organischen Netzwerkbildners und der wenigstens einen reaktiven organischen Komponente zu der Flüssigphase zugegeben werden. Somit können die Perlglanzpigmente zunächst in einer Flüssigphase vorgelegt und nachfolgend der oder die anorganischen Netzwerkbildner, der oder die organischen Netzwerkbildner sowie die reaktive(n) organische(n) Komponente(n) in beliebiger Reihenfolge zugegeben werden. Die Perlglanzpigmente können aber auch während der Umsetzung oder nach der Umsetzung zu der Beschichtungszusammensetzung zugegeben werden. In Abhängigkeit von der Reihenfolge der Zugabe und den angelegten Reaktionsbedingungen kann auf der Perlglanzpigmentoberfläche zunächst eine überwiegend anorganische oder überwiegend organische Schicht aufgebracht werden, bevor die anorganisch/organische Mischschicht aufgebracht wird. Die anorganisch/organische Schicht kann selbstverständlich auch direkt auf die unbeschichtete oder vorbeschichtete Perlglanzpigmentoberfläche aufgebracht werden.

Gemäß einer bevorzugten Weiterbildung umfasst das erfindungsgemäße Verfahren folgende Schritte:
(a) Bereitstellen einer Reaktionsmischung von plättchenförmigen transparenten Substraten in einer Flüssigphase,
(b1) Zugeben wenigstens eines anorganischen Netzwerkbildners zu der Reaktionsmischung von Schritt (a),
(c1) Hydrolysieren und/oder Kondensieren des in Schritt (b1) zugegebenen anorganischen Netzwerkbildners,
(d1) Zugeben wenigstens eines reaktiven organischen Netzwerkbildners und wenigstens einer reaktiven organischen Komponente vor, während und/oder nach der Hydrolyse und/oder Kondensation von Schritt (c1),
oder
(b2) Zugeben wenigstens eines reaktiven organischen Netzwerkbildners und wenigstens einer reaktiven organischen Komponente zu der Reaktionsmischung von Schritt (a),
(c2) Zugeben wenigstens eines hydrolysierbaren und/oder kondensierbaren anorganischen Netzwerkbildners zu der Reaktionsmischung von Schritt (b2),
(d2) Hydrolysieren und/oder Kondensieren des in Schritt (c2) zugegebenen anorganischen Netzwerkbildners,
und
(e) Umsetzen von hydrolysiertem und/oder kondensiertem anorganischen Netzwerkbildner mit dem reaktiven organischen Netzwerkbildner sowie der reaktiven organischen Komponente unter gleichzeitigem und/oder nachfolgendem Abscheiden einer anorganisch/organischen Mischschicht,
(f) optional Abtrennen der in Schritt (e) beschichteten plättchenförmigen transparenten Substrate von der Reaktionsmischung.

In den Unteransprüchen 19 - 37 sind bevorzugte Weiterbildungen des erfindungsgemäßen Verfahrens angegeben.

Unter anorganischem Netzwerkbildner wird im Sinne der Erfindung verstanden, daß der anorganische Netzwerkbildner ein anorganisches Netzwerk aufbauen kann. Eine anorganischer Netzwerkbildner kann beispielsweise ein hydrolysierbares Metallsalz oder auch eine vollständig hydrolysierbare metallorganische Verbindung sein.

Unter einem organischen Netzwerkbildner wird im Sinne der Erfindung verstanden, daß der organische Netzwerkbildner in Verbindung mit einer reaktiven organischen Komponente ein organisches oder metallorganisches Netzwerk aufbauen kann. Ein organischer Netzwerkbildner ist vorzugsweise eine metallorganische Verbindung, die nur teilweise hydrolysierbar ist und mithin kein anorganisches Netzwerk aufbauen kann.

Die der Erfindung zugrunde liegende Aufgabe wird auch durch die Verwendung des plättchenförmigen Perlglanzpigmentes nach einem der Ansprüche 1 bis 17 in Lacken, Automobillacken, Farben, Druckfarben, Pulverlacken, Bautenanstrichen, Kunststoffen, Sicherheitsdruckfarben, Keramiken, Glas oder kosmetischen Zubereitungen gelöst.

Die der Erfindung zugrunde liegende Aufgabe wird ferner durch die Verwendung des plättchenförmigen Perlglanzpigmentes nach einem der Ansprüche 1 bis 17 als Lasermarker gelöst.

Überraschenderweise zeigt sich, dass sich die Farbtonstabilität von mit Eisenoxid beschichteten Glimmerpigmenten (Perlglanz) bei ihrer Einarbeitung in eine Polycarbonatschmelze durch Extrusion entscheidend verbessert, wenn die Perlglanzpigmente nachträglich mit einer erfindungsgemäßen anorganisch/organischen Mischschicht beschichtet wurden.
Im Gegensatz zum Stand der Technik trat diese Verbesserung auf, obwohl lediglich eine einzige zusätzliche Deckschicht aufgebracht wird. Dies lässt sich auf die gegenüber rein anorganisch aufgebauten Metalloxidschichten erhöhte Elastizität der gemischten anorganisch-organischen Deckschicht zurückführen. Vor allem bei erhöhter mechanischer Beanspruchung, wie sie z.B. bei der Coextrusion von Perlglanzpigment und Polycarbonat-Granulat gegeben ist, zeigt sich deutlich der Vorteil der erfindungsgemäßen Beschichtung.

Zudem besteht die Möglichkeit mit einer anorganisch/organischen Mischschicht eine verbesserte Wetterstabilität von Perlglanzpigmenten im Vergleich zu reinen anorganischen oder organischen Schichten zu erreichen.

Somit lassen sich durch den Einbau organischer Oligomere und/oder Polymere in anorganische Oxidschichten anwendungstechnische Eigenschaften von Perlglanzpigmenten in vielfältigster Weise verbessern.

Gegenstand der Erfindung sind daher Perlglanzpigmente, die wenigstens eine Beschichtung, die eine anorganisch/organische Mischschicht umfasst, aufweisen, wobei die Mischschicht wenigstens teilweise ein anorganisches Netzwerk, das eine oder mehrere anorganische Oxidkomponente(n) aufweist, und wenigstens eine organische Komponente aufweist, wobei die organische Komponente ein organisches Oligomer und/oder Polymer ist, welches wenigstens teilweise mit dem anorganischen Netzwerk über einen oder mehrere organische Netzwerkbildner kovalent verbunden ist.

Erfindungsgemäß erfolgt die wenigstens teilweise kovalente Verbindung des anorganischen Oxidnetzwerkes mit dem organischen Oligomer und/oder Polymer über wenigstes einen organischen Netzwerkbildner. Hierbei handelt es sich um Reagenzien, die sowohl an das anorganische Netzwerk als auch an das organische Oligomer und/oder Polymer anbinden können.

Erfindungsgemäß erfolgt die wenigstens teilweise kovalente Bindung von anorganischer Oxidkomponente und organischem Oligomer und/oder Polymer wenigstens teilweise durch einen oder mehrere organische Netzwerkbildner, wobei der organische Netzwerkbildner vorzugsweise die allgemeine Formel (I)

R¹ₙR²ₘR³ₒSiX₍₄₋ₙ₋ₘ₋ₒ₎ (I)

aufweist, wobei X für eine hydrolysierbare Gruppe, nach deren Hydrolyse eine kovalente Bindung von organischem Netzwerkbildner mit dem anorganischen Netzwerk ausgebildet werden kann, steht
und R¹ für eine reaktive organische Gruppe steht, die mit dem organischen Oligomer und/oder Polymer kovalent verbindbar ist,
R² und R³ unabhängig voneinander jeweils für eine organische Gruppe stehen, die mit dem organischen Oligomer und/oder Polymer kovalent verbindbar sein können, mit der Maßgabe,
daß n, m und o ganze Zahlen sind, wobei n+m+o = 1-3 und n = 1 bis 3, m = 0 bis 2 und o = 0 bis 2 ist,
und/oder die allgemeine Formel (II)

(R¹O)ₙ(R²O)ₘ(R³O)ₒMX₍ₖ₋ₙ₋ₘ₋ₒ₎ (II)

aufweist, wobei die metallorganische Verbindung wenigstens eine hydrolysierbare Gruppe X, nach deren Hydrolyse eine kovalente Bindung von organischem Netzwerkbildner mit dem anorganischen Netzwerk ausgebildet werden kann,
wenigstens einen organischen Rest R¹, der für eine reaktive organische Gruppe steht, die mit dem organischen Oligomer und/oder Polymer kovalent verbindbar ist, und R² und R³ unabhängig voneinander jeweils für eine organische Gruppe stehen können, die mit dem organischen Oligomer und/oder Polymer kovalent verbindbar sein können, wobei
- k: für die formale Oxidationszahl von M steht,
- M: für Al, Zr oder Ti steht,
- n: für eine ganze Zahl von 1 bis (k-1) steht,
- m: für eine ganze Zahl von 0 bis (k-2) steht,
- o: für für eine ganze Zahl von 0 bis (k-2) steht, und
wobei n+m+o eine ganze Zahl von 1 bis k-1 ist.

Unter formaler Oxidationszahl wird erfindungsgemäß verstanden, daß Aluminium die Oxidationszahl III, Zirkonium die Oxidationszahl II, III oder IV, und Titan die Oxidationszahl II, III oder IV haben kann. Vorzugsweise haben sowohl Zirkonium als auch Titan die Oxidationszahl IV.

Die reaktive Gruppe R¹ bzw. der reaktive organische Rest R¹ ist erfindungsgemäß polymerisierbar. Der Rest R¹ kann beispielsweise mit weiteren Resten R¹ polymerisierbar sein, so daß der organische Netzwerkbildner als solcher in einer oligomerisierten oder polymerisierten Form in der anorganisch/organischen Mischschicht vorliegen kann. Der Rest R¹ kann aber auch mit anderen Monomeren polymerisierbar sein, so daß der organische Netzwerkbildner in der anorganisch/organischen Mischschicht in einem auch aus weiteren Monomeren aufgebautem Polymer in einpolymerisierter Form vorliegen kann.

Als organische Netzwerkbildner sind besonders bevorzugt organofunktionelle Silane. Diese können nach der Hydrolyse der hydrolysierbaren Gruppe X an das anorganische Netzwerk anbinden. Durch die Hydrolyse wird die Gruppe X in der Regel durch eine OH-Gruppe ersetzt, die dann unter Kondensation mit OH-Gruppen des anorganischen Netzwerkes eine kovalente Bindung ausbildet. Dabei steht die Gruppe X vorzugsweise für Halogen, Hydroxy, Alkoxy mit 1-10 C-Atomen, welche geradkettig oder verzweigt sein können, in der Kohlenstoffkette aufweisen können, und Mischungen davon.

Der organische Netzwerkbildner bindet wenigstens über die funktionelle Gruppe R¹ mit oder an das organische Oligomer und/oder Polymer. R¹ ist eine reaktive funktionelle Gruppe.

Der reaktive, polymerisierbare, organische Rest R¹ weist einen oder mehrere Substituenten auf, die aus der Gruppe ausgewählt werden ,die aus Amino-, Hydroxy-, Thiol-, Epoxy-, Acrylat-, Methacrylat-, Vinyl-, Allyl-, Alkenyl-, Alkinyl-, Carboxy-, Carboxylanhydrid-, Isocyanat-, Cyanat-, Ureido-, Carbamatgruppe und Mischungen davon besteht. Der organische Rest R¹ ist vorzugsweise über eine kovalente C-Si Bindung mit dem zentralen Siliziumatom verbunden.

Die Reste R² und R³ werden unabhängig voneinander aus der Gruppe, die aus H-, (C₁-C₄₀)-Alkyl-, (C₁-C₄₀)-fluorierte Alkyl-, (C₁-C₄₀)-teilfluorierte Alkyl-; (C₂-C₄₀)-Alkenyl-, (C₂-C₄₀)-Alkinyl-; (C₆-C₃₆)-Aryl-, fluorierte (C₆-C₃₆)-Aryl-, teilfluorierte (C₆-C₃₆)-Aryl-; (C₇-C₄₀)-Alkylaryl-, (C₇-C₄₀)-Arylalkyl-, fluorierte (C₇-C₄₀)-Alkylaryl-, teilfluorierte (C₇-C₄₀)-Alkylaryl-; (C₈-C₄₀)-Alkenylaryl-, (C₈-C₄₀)-Arylalkinyl-, (C₈-C₄₀)-Alkinylaryl-; (C₅-C₄₀)-Cycloalkyl-, (C₆-C₄₀)-Alkylcycloalkyl-, (C₆-C₄₀)-Cycloalkylalkylsilane, die jeweils mit Amino-, Hydroxy-, Thiol-, Epoxy-, Acrylat-, Methacrylat-, Vinyl-, Allyl-, Alkenyl-, Alkinyl-, Carboxy-, Carboxylanhydrid-, Isocyanat-, Cyanat-, Ureido-, Carbamat- und/oder Estergruppe substituiert sein und in den Kohlenstoffketten und Kohlenstoffringsystemen O,N und S als Heteroatome enthalten können, besteht, ausgewählt. Vorzugsweise weisen die Reste R² und R³ Kettenlängen mit 3 bis 20 Kohlenstoffatomen, weiter bevorzugt mit 5 bis 18 Kohlenstoffatomen auf. Die Reste R² und R³ können dabei verzweigt und/oder linear sein. Im Falle von Alkylketten können diese von Heteroatomen wie O, S, oder N unterbrochen sein.

Die organische Gruppe bzw. der Rest R¹ weist jedenfalls eine Reaktivität auf, die eine kovalente Bindung des organischen Oligomers und/oder Polymers ermöglicht.

Die organischen Gruppen bzw. Reste R² und/oder R³ können auch eine Reaktivität aufweisen, die eine kovalente Bindung des organischen Oligomers und/oder Polymers ermöglicht. Im Unterschied zur organischen Gruppe R¹ bzw. dem Rest R¹ ist es jedoch nicht erforderlich, daß zwischen den Resten R² und/oder R³ eine kovalente Bindung zu dem organischen Oligomer und/oder Polymer ausgebildet wird. Insofern können die Reste R² und/oder R³ auch nicht-reaktiv sein. Insbesondere sind die Reste R² und R³ vorzugsweise unter den angelegten Reaktionsbedingungen nicht polymerisierbar. Somit ist bevorzugt, daß die Reste R² und R³ im Unterschied zu dem Rest R¹ nicht untereinander polymerisieren und, insbesondere unter den angelegten Reaktionsbedingungen, nicht mit Monomeren zu einem Polymer umgesetzt werden können.

Geeignete organofunktionelle Silane sind beispielsweise viele Vertreter der von der Fa. Degussa (Untere Kanalstrasse 3, D-79618 Rheinfelden) hergestellten und unter dem Handelsnamen "Dynasylan" vertriebenen Produkte anzusehen. Beispielsweise können 3-Methacryloxypropyltrimethoxysilan (Dynasylan MEMO) zum Aufbau eines (Meth)acrylats oder Polyesters, Vinyltri(m)ethoxysilan (Dynasylan VTMO bzw. VTEO) zum Aufbau eines Vinylpolymeren, 3-Mercaptopropyltri(m)ethoxysilan (Dynasylan MTMO oder 3201) zum Einpolymerisieren in Kautschukpolymere, Aminopropyl-trimethoxysilan (Dynasylan AMMO) oder N2-Aminoethyl-3-aminopropyltrimethoxy-silan (Dynasylan DAMO) zum Aufbau eines β-Hydroxyamines oder 3-Glycidoxy-propyltrimethoxysilan (Dynasylan GLYMO) zum Aufbau eines Urethan- oder Polyethemetzwerkes verwendet werden.

Weitere Beispiele für Silane mit Vinyl- bzw. (Meth)acrylatfunktionalitäten sind:
Isocyanatotriethoxysilan, 3-Isocyanatopropoxyltriethoxysilan, Vinylethyldichlosilan,
Vinylmethyldichlosilan, Vinylmethyldiacetoxysilan, Vinylmethyldiethoxysilan,
Vinyltriacetoxysilan, Vinyltrichlorsilan, Phenylvinyldiethoxysilan,
Phenylallyldiethoxy-silan, Phenylallyldichloroysilan,
3-Methacryloxypropyltriethoxysilan, Methacryloxy-propyltrimethoxysilan,
3-Acryloxypropyltrimethoxysilan, 2-Methacryloxyethyltri-(m)ethoxysilan,
2-Acryloxyethyltri(m)ethoxysilan, 3-Methacryloxypropyltris(methoxy-ethoxy)silan,
3-Methacryloxypropyltris(butoxyethoxy)silan, 3-Methacryloxypropyltris(propoxy)silan, 3-Methacryloxypropyltris(butoxy)silan.

Weiterhin können vorteilhaft sogenannte α-Silane, wie sie von der Fa. Wacker, Burghausen, Deutschland hergestellt und vertrieben werden, verwendet werden.

Bei diesen Silanen sind die reaktionsfähigen organischen Gruppen lediglich durch eine Methyleneinheit vom Si-Atom getrennt. Sie zeichnen sich gegenüber den konventionellen Silanen durch beschleunigte Hydrolyse- und Kondensationsgeschwindigkeiten aus.

Als organische Netzwerkbildner gemäß Anspruch 1 können auch geeignete organofunktionelle Titanate, Zirkonate oder Aluminate verwendet werden, wie sie beispielsweise von der Firma Kenrich Petrochemicals hergestellt und unter dem Handelsnamen Ken-React^{®} angeboten werden. (beziehbar bei der Fa. Nordmann, Rassmann GmbH, Kajen 2, 20459 Hamburg). Insbesondere die im KEN-REACT^{®} Reference Manual Titanate, Zirconate and Aluminate Coupling Agents, 2. Überarbeitete Ausgabe, Sommer 1993, auf den Seiten 2 bis 21 angegebenen Kopplungsreagenzien können zum größten Teil als organische Netzwerkbildner verwendet werden. Die Offenbarung der Seiten 2 bis 21 des vorgenannten KEN-REACT^{®} Reference Manuals wird hiermit unter Bezugnahme aufgenommen.

Diese organischen Netzwerkbildner weisen vorzugsweise als hydrolysierbare oder kondensierbare Gruppe X bevorzugt Alkoxy, jedoch auch Hydroxy oder Halogen auf. Im Fall von Alkoxy kann auch eine cyclische Gruppe, die über zwei Sauerstoffatome an das Zentralatom M gebunden ist, wie beispielsweise Oxoethylen oder Cycloneopentyl, vorliegen. Das Zentralatom M hat in diesem Fall nur noch zwei weitere Substituenten. Die hydrolysierbare Gruppe kann auch Bestandteil einer zyklischen Einheit, die über weitere Sauerstoffatome an das Zentralatom koordinativ gebunden sind, sein und somit nach Hydrolyse nicht vom Molekül abgespalten werden.

Bei weiteren Formen können zwei koordinativ an das Zentralatom gebundene Organophosphitoliganden vorliegen. In diesem Fall sind vier Alkoxyliganden an das Zentralatom gebunden.

Diese Al-, Zr- oder Ti-organischen Netzwerkbildner können in Form von Chelatkomplexen oder Koordinationskomplexen vorliegen. Die Liganden können dabei Heteroatome, vorzugsweise N, S oder O, enthalten.

Beispiele derartiger organischer Netzwerkbildner sind (siehe KEN-REACT^{®} Reference Manual - Titanate, Zirconate and Aluminate Coupling Agents by Salvatore J. Monte):
Isopropyldimethacrylisostearoyltitanat(IV) (KR7), Alkoxytrimethacryltitanat (KR 33DS), Isopropyltri(N-ethylendiamino)ethyltitanat(IV) (KR 44), Tris(2-propenoato-0)methoxyglycolytotitanat (KR 39DS), Methacrylatotriisopropoxytitanat, Methacryloxyethylacetoacetonatotriisopropoxytitanat, (2-Methacryloxyethoxy)-triisopropoxytitanat, Titan(IV)2,2(bis 2propenolatomethyl)butanolato-tris(dioctyl)pyrophosphato-0 (LICA 38J), Methacryloxyethylacetoacetonatotri-n-propoxyzirkonat, Neopentyl(diallyl)oxy-tri(N-ethylendiamino)ethylzirconat(IV) (NZ 44), 9-Octadecenylacetoacetatodiisopropoxyaluminat.

Die anorganische Komponente der Mischschicht besteht bevorzugt aus Metalloxid- und/oder Metalloxidhydrat und/oder Metallsuboxid- und/oder Metallhydroxid, welches untereinander wenigstens teilweise ein zwei- oder dreidimensionales Netzwerk ausbildet.

Der anorganische Anteil der Mischschicht aus Metalloxid und/oder Metallsuboxid und/oder Metallhydroxid wird aus folgender Gruppe ausgewählt: Silizium, Aluminium, Titan, Zirkonium, Cer, Chrom, Mangan, Antimon, Zink, Bor, Magnesium und Eisen und deren Mischungen und Legierungen.

Als Ausgangsverbindungen, die als anorganische Netzwerkbildner wirken, dieser Oxide werden bevorzugt Alkoxide, Hydroxide und Halogenide dieser Verbindungen verwendet.

Vorzugsweise besitzen die anorganischen Netzwerkbildner die allgemeine Formel

MXₙ,

wobei X unabhängig voneinander eine ggf. hydrolysierbare und/oder kondensierbare Gruppe aus Halogen, Hydroxy oder Alkoxy mit 1-10 C-Atomen, wobei die Alkoxygruppe in der Kohlenstoffkette Heteroatome, vorzugsweise O, S und/oder N, in der Kohlenstoffkette aufweisen kann, ist.

Das Metall M steht vorzugsweise für Si, Al, Ti, Zr, B, Fe, Mg, Mn, Sb, Cr, Zn und/oder Ce steht, mit der Maßgabe, daß,
wenn M für Sb(V) steht,
n = 5 ist und,
wenn M für Si, Ti oder Zr steht,
n = 4 ist und,
wenn M für Al, Ce, Fe(III), Sb(III) oder B steht,
n = 3 ist und,
wenn M für Zn, Fe(II) oder Mg steht,
n = 2 ist.

Im Fall von M = Al, Ti, Zr, Fe kann X auch für chelatisierende Liganden wie beispielsweise Acetylacetonate oder Acetessigsäureester stehen.

Bevorzugt werden anorganische Netzwerkbildner verwendet, bei denen M für Si, Al, Ti und/oder Zr steht und X für Alkoxygruppen mit 1 bis 6 C-Atomen, wobei die Alkoxygruppe in der Kohlenstoffkette Heteroatome, vorzugsweise O, S und/oder N, in der Kohlenstoffkette aufweisen kann, steht. Besonders bevorzugt werden Tetraalkoxysilane, insbesonderer Tetramethoxy- und/oder Tetraethoxysilane, zum Aufbau einer SiO₂-Schicht verwendet.

Perlglanzpigmente, insbesondere eine oder mehrere Eisenoxidschichten enthaltende Perlglanzpigmente, die mit einer bevorzugten Mischschicht aus SiO₂ und Acrylat und/oder Methacrylat, versehen sind, sind mechanisch sehr stabil. Perlglanzpigmente, die eine oder mehrere Titandioxidschichten enthalten, sind mit dieser bevorzugten Mischschicht machanisch sehr stabil und zudem witterungsstabil. Es hat sich gezeigt, daß diese Eigenschaften weiter verbessert werden können, wenn bei Erzeugung des anorganischen Netzwerks, beispielsweise durch Hydrolyse von Tetraethoxysilan, Acrylsilan und Acrylmonomer und/oder Methacrylmonomer zugegeben werden. Bei diesem Ansatz erfolgt zum einen eine Ankopplung von Acrylsilan an das sich ausbildende SiO₂-Netzwerkes und zum anderen eine Polymerisation von Acrylmonomer und/oder Methacrylamonomers sowie eine Einpolymerisation der Acrylgruppe des Acrylsilans in das sich aus Acrylmonomeren und/oder Methyacrylmonomeren aufbauende Acryloligomer und/oder -polymer und/oder Methacryloligomer und/oder -polymer.

Die Fällung von rein anorganischen Beschichtungen von Perlglanzpigmenten aus derartigen Metallausgangsverbindungen erfolgt üblicherweise bei spezifischen pH-Werten. Diese und weitere typische Reaktionsbedingungen, wie Temperatur oder Dauer sind dem Fachmann bekannt.

Wenn die Fällung des Metalloxids aus geeignetem anorganischen Netzwerkbildner auf dem plättchenförmigen transparenten Substrat in Gegenwart geeigneter Monomere und optional Polymerisationsstarter sowie organischen Netzwerkbildnern durchgeführt wird, so kann gleichzeitig gezielt ein anorganisches Oxidnetzwerk und ein organisches Oligomer und/oder Polymer gebildet werden. Das anorganische Netzwerk und die organischen Oligomere und/oder Polymere durchdringen sich vorzugsweise gegenseitig.

Bei einer bevorzugten Weiterbildung der Erfindung liegt sowohl ein anorganisches Netzwerk als auch ein organisches Netzwerk aus Oligomeren und/oder Polymeren vor, die sich vorzugsweise gegenseitig durchdringen.

In Abhängigkeit von den Reaktionsbedingungen, Mengenverhältnissen der eingesetzten Edukte und den Kinetiken der ablaufenden Reaktionen kann die anorganisch/organische Mischschicht im wesentlichen homogen ausgebildet sein. Es können aber auch kleine Bereiche aus anorganischem Netzwerk und/oder organischem Oligomer und/oder Polymer in der Mischschicht vorliegen.

Unter organischen Oligomeren in der Mischschicht wird in dieser Erfindung der in der Polymerchemie übliche Begriff verstanden: d.h. die Verknüpfung von zwei bis zwanzig Monomereinheiten (Hans-Georg Elias, "Makromoleküle" 4. Auflage 1981, Hüthig & Wepf Verlag Basel). Polymere sind Verknüpfungen ab mehr als zwanzig Monomereinheiten.

Aufgrund der Vielfalt organischer Monomere und der Verwendung verschiedener Oxide oder Oxidmischungen ist grundsätzlich ein weiter Bereich an Variationsmöglichkeiten einer anorganisch/organischen Mischschichtbildung möglich. Durch das Verhältnis von Monomerkonzentration zur Konzentration der organischen Netzwerkbildner ist die durchschnittliche Kettenlänge der organischen Segmente variierbar. So können Beschichtungen erzeugt werden, die den Perlglanzpigmenten in vielerlei Hinsicht maßgeschneiderte Eigenschaften verleihen. Die durchschnittliche Kettenlänge der organischen Segmente beträgt 2 bis 10.000, bevorzugt 4 bis 5.000, besonders bevorzugt 10 bis 1.000 und besonders bevorzugt 40 bis 200 Monomereinheiten.

Weiterhin werden als organische Komponente besonders bevorzugt organische Polymere mit durchschnittlichen Kettenlängen von 21 bis 15.000, bevorzugt von 50 bis 5.000 und besonders bevorzugt von 100 bis 1.000 Monomereinheiten, verwendet.

Das organische Oligomer und/oder Polymer in der Mischschicht wird durch in der organischen Polymerchemie übliche Gerüstmoleküle aufgebaut. Dies sind beispielsweise C-C-Bindungen, Amide, Ester, Acrylate etc. Nicht verwendet werden Siloxane, da Silanreste der Netzwerkbildner zur Verknüpfung des anorganischen Netzwerkes mit dem organischen Netzwerk dienen. Zudem kann die gewünschte mechanische Flexibilität der Mischschicht nur durch den Einbau von organischen Gerüstmolekülen erreicht werden.

Das organische Oligomer und/oder Polymer in der Mischschicht kann bevorzugt durch Polymerisation geeigneter Monomere aufgebaut werden. Die Monomere können Funktionalitäten aufweisen, die aus der Gruppe, die aus Amino-, Hydroxy-, Thiol-, Epoxy-, Acrylat-, Methacrylat-, Vinyl-, Allyl-, Alkenyl-, Alkinyl-, Carboxy-, Carboxylanhydrid-, Isocyanat-, Cyanat-, Ureido-. Carbamat-, Estergruppe und Mischungen davon besteht, ausgewählt werden.

Bei einer bevorzugten Ausführungsform wird die anorganisch/organische Mischschicht unter Verwendung von organischen Netzwerkbildnern zur kovalenten Verknüpfung von anorganischem und organischen Netzwerken und durch Polymerisation von organischen Monomeren, durchgeführt. Besonders bevorzugt ist die Verwendung von (Meth)acrylatfunktionen-haltigen Silanen wie beispielsweise Dynasylan MEMO als organische Netzwerkbildner und von Methacrylaten als Monomeren.

Geeignet sind als Monomere oder reaktive Oligomere oder Polymere insbesondere vernetzende, d.h. mehrfunktionelle (Meth)acrylate. Beispiele für solche Verbindungen sind:
Tetraethylenglycoldiacrylat (TTEGDA), Triethylenglycoldiacrylat (TIEGDA), Polyethylenglycol-400-diacrylat (PEG400DA), 2,2'-Bis(4-acryloxyethoxyphenyl)-propan, Ethylenglycoldimethacrylat (EGDMA), Diethylenglycoldimethacrylat (DEGDMA), Triethylenglycoldimethacrylat (TRGDMA), Tetraethylenglycoldimethacrylat (TEGDMA), Butyldiglycolmethacrylat (BDGMA), Trimethylolpropantrimethacrylat (TMPTMA),1,3-Butandioldimethacrylat (1,3-BDDMA), 1,4-Butandioldimethacrylat (1,4-BDDMA), 1,6-Hexandioldimethacrylat (1,6-HDMA), 1,6-Hexandioldiacrylat (1,6-HDDA), 1,12-Dodecandioldimethacrylat (1, 12-DDDMA), Neopentyl-glycoldimethacrylat (NPGDMA).

Besonders bevorzugt ist Trimethylolpropantrimethacrylat (TMPTMA).
Diese Verbindungen sind kommerziell erhältlich bei Elf Atochem Deutschland GmbH, D-40474 Düsseldorf Deutschland oder Rohm & Haas, In der Kron 4, 60489 Frankfurt / Main, Deutschland.

Nicht vernetzende (Meth)acrylate können auch als Monomere zum Aufbau der organischen Komponente, d.h. des organischen Oligomers und/oder Polymers, der Mischschicht verwendet werden. Abhängig von weiteren funktionellen Gruppen dieser (Meth)acrylate können wiederum vielfältigste Variationsmöglichkeiten der chemischen Zusammensetzung und damit auch der anwendungstechnischen Eigenschaften der mit einer Mischschicht versehenen Perlglanzpigmente ermöglicht werden. Geeignet sind auch Mischungen von vernetzenden und monofunktionellen Vinyl- und/oder (Meth)acrylatmonomeren.

Beispiele monofunktioneller (Meth)acrylate sind: Lauryl(meth)acrylat, Allyl(meth)-acrylat, Propyl(meth)acrylat, Isobornylmethacrylat und Hydroxyethylimidazolinmethacrylat.

Diese Verbindungen sind kommerziell ebenfalls erhältlich bei Elf Atochem Deutschland GmbH, Uerdingerstr. 4 D-40474 Düsseldorf oder bei Rohm & Haas,
In der Kron 4, 60489 Frankfurt / Main Deutschland.

Die Polymerisation von Vinyl- und/oder (Meth)acrylatfunktionellen Monomeren beim Aufbau der anorganisch/organischen Mischschicht kann durch thermische Polymerisation erfolgen. Günstiger ist die Verwendung von Polymerisationsstartern, vorzusweise von Radikalinitiatoren. Dabei handelt es sich um handelsübliche i.d.R. organische oder anorganische Peroxide oder Diazoniumverbindungen. Beispiele solcher Verbindungen sind:
Acetyl-cyclohexan-sulfonylperoxid, Bis(2,4-dichlorbenzoyl)peroxid, Diisononanylperoxid, Dioctanoylperoxid, Diacetyl- und Dibenzoylperoxid; Peroxidicarbonate (z.B. Diisopropyl-peroxydicarbonat, Di-n-butylperoxydicarbonat, Di-2-ethylhexyl-peroxydi-carbonat, Dicyclohexyl-peroxydicarbonat), Alkylperester (z.B. Cumylperneodecanoat, t-Butyl-perneodecanoat, t-Amyl-perpivalat, t-Butyl-per-2-ethylhexanoat, t-Butylperiso-butyrat, t-Butylperbenzoat), Dialkylperoxide (z.B. Dicumylperoxid, t-Butylcumyl-peroxid, 2,5-Dimethylhexan-2,5-di-t-butylperoxid, Di(t-butylperoxyisopropyl)benzol, Di-t-butyl-peroxid, oder 2,5-Dimethylhexin-3-2,5-di-t-butylperoxid), Perketale (z.B. 1,1'-Bis-(t-butylperoxy)-3,3,5-trimethylcyclohexanonperoxid, Methylisobutylketon-peroxid, Methylethylketonperoxid, Acetylacetonperoxid), Alkylhydroperoxide (z.B. Pinanhydroperoxid, Cumolhydroperoxid, 2,5-Dimethylhexan-2,5-dihydroperoxid oder t-Butylhydroperoxid), Azoverbindungen (z.B. 4-4'-Azo-bis(4-cyanvaleriansäure),1,1'-Azo-bis(cyclohexan-carbonsäurenitril), 1,1'-Azo-bis(isobutyrosäureamidin)dihydro-chlorid, 2,2'-Azo-bis(iso-butyronitril) oder Persulfate wie Natriumperoxodisulfat und Kaliumperoxodisulfat. Bevorzugt ist 2,2'-Azo-bis(isobutyronitril).

Diese Verbindungen sind kommerziell erhältlich bei Aldrich Chemie, D-89552, Steinheim.

Weiterhin kann die Polymerisation von Vinyl- und/oder (Meth)acrylat-funktionellen Monomeren beim Aufbau der anorganisch/organischen Mischschicht auch durch eine ATRP (atomic-transfer-radical-polymerisation), der sogenannte Lebendradikalischen Polymerisation durchgeführt werden. Hier wird als organischer Netzwerkbildner bevorzugt eine Silanverbindung, bei der R¹ endständig mit einem Alkylhalogenid, bevorzugt einem Alkylbromid mit α-ständiger Estergruppe, versehen ist, verwendet. Ferner werden hierbei Cu(I)-Salze, optional in Mischung mit Cu(II)-salzen oder metallischem Cu, sowie geeignete die Kupferverbindungen komplexierende Liganden zugesetzt. Nähere Einzelheiten hierzu finden sich in der DE 198 38 241 A1.

Bei Verwendung von Epoxysilanen als organische Netzwerkbildner können diese mit mehrfach funktionellen Aminen als Vernetzer umgesetzt werden. Weitere Variationsmöglichkeiten erhält man zusätzlich noch bei Verwendung von mehrfach funktionellen Epoxyverbindungen. Kombinationen mehrfach funktioneller Epoxyverbindungen und mehrfach funktioneller Aminoverbindungen können selbstverständlich auch bei Verwendung von aminofunktionellen Silanen als Kupplungsreagenzien eingesetzt werden.

Zu solchen Reaktionen geeignete und kommerziell erhältliche mehrfach funktionelle Amine sind z.B.: 3,3-Dimethyl-4,4-diaminodicyclohexylmethan, Ethylendiamin, Triethylentetramin, meta-Xylylendiamin, N-Aminoethylpiperazin, 2-Methyl-1,5-pentamethylendiamin, 1,2-Diaminocyclohexan oder Isophorondiamin.

Geeignete kommerziell erhältliche mehrfach funktionelle Epoxyverbindungen sind z.B.: 1,4-Butandioldiglycidether, Glycerintriglycidether, Neopentylglykoldiglycidether, Pentaerythritpolyglycidether, 1,6-Hexandioldiglycidether, Polypropylenglykoldiglycid-ether oder Trimethylolpropantriglycidether.

Alle diese mehrfach funktionellen Amine und Epoxyverbindungen sind kommerziell erhältlich bei der Firma UPPC: (U. Prümmer Polymer-Chemie GmbH; Mühlhalde 8 in D-88487 Baltringen).

Bei einer weiteren erfindungsgemäßen Ausführungsform wird das organische Netzwerk nicht während der Reaktion hergestellt. Stattdessen verwendet man als organische Komponente reaktive organische Oligomere und/oder Polymere, welche über reaktionsfähige Gruppen verfügen; die eine Anbindung an das Oxidnetzwerk über die mindestens eine Gruppe R¹ der organischen Netzwerkbildner ermöglichen. Um eine effektive Reaktion mit insbesondere der Gruppe R¹ der organischen Netzwerkbildner zu gewährleisten, kann das Oligomer und/oder Polymer vor dem Einbau in die Mischschicht auch direkt mit dem organischen Netzwerkbildner umgesetzt werden. Hierzu werden die Oligomere und/oder Polymere in einem geeigneten Lösungsmittel gelöst, mit organischen Netzwerkbildnern versetzt und zur Reaktion gebracht. Die mit dem organischen Netzwerkbildner gekoppelten organischen Oligomere und/oder Polymere können dann mit den zur Erzeugung des anorganischen Netzwerkes verwendeten Metalloxid-bildenden Verbindungen unter Ausbildung der anorganisch/organischen Mischschicht umgesetzt werden.

Reaktive organische Oligomere und/oder Polymere, die direkt in das anorganische Netzwerk während der Reaktion eingebaut werden können, sind beispielsweise silanmodifizierte Polyethylenimine oder Polybutadiene oder mit Aminosilan modifizierte Polyethylenoxidurethane. Bei derartigen Verbindungen sind besonders niedrige Molekulargewichte von 100 bis 1000 g/mol bevorzugt. Niedermolekulare Verbindungen dieses Typs weisen über besonders viele Verknüpfungsstellen zum anorganischen Oxidnetzwerk auf und ergeben damit homogener verteilte anorganisch/organische Mischschichten.

Beispiele derartiger kommerziell erhältlicher Verbindungen sind:

Trimethoxysilylpropyl- substituiertes Polyethylenimin, Dimethoxymethylsilylpropylsubstituiertes Polyethylenimin, Triethoxysilyl- modifizierte Polybutadiene, Dimethoxymethylsilyl- modifiziertes Polybutadiene, ,(N-Triethoxysilylpropyl)O-Polyethylenoxidurethan und Poly(trimethysilylpropin) (alle zu beziehen über z.B. ABCR GmbH & Co. Postfach 210135, Hansastr. 29c, D-76151 Karlsruhe, Deutschland). Ein weiteres Beispiel sind mit Silanen modifizierte Phenolformaldehyd-oligomere, wie sie als Resole oder Novolacke von der Bakelite AG (Gennaer Straße2-4, D-58642 Iserlohn-Letmathe) hergestellt und vertrieben werden.

Bei einer weiteren erfindungsgemäßen Ausführungsform können als reaktive Oligomere und/oder Polymere auch Verbindungen eingesetzt werden, die über reaktive, vorzugsweise polymerisierbare, funktionelle Gruppen verfügen. Die polymersierbaren funktionellen Gruppen können beispielsweise durch eine nachträgliche Reaktion des Oligomeren und/oder Polymeren (beispielsweise durch eine Polymer-analoge Umsetzung) hergestellt werden. Diese reaktiven Oligomere/Polymere reagieren mit den funktionellen organischen Gruppen geeigneter organischer Netzwerkbildner und werden somit an das bzw. in dem anorganische(n) Oxidnetzwerk kovalent gebunden.

Bei diesen reaktiven Oligomeren und/oder Polymeren kann es sich um Reaktivpolymere aus der Gruppe der Polyacrylate, Polymethacrylate, Polyether, Polyester, Polyamine, Polyamide, Polyole, Polyurethane und Polyolefine handeln.

Organische Oligomere und/oder Polymere, die über geeignete funktionelle Gruppen direkt in die Mischschicht eingebaut werden können, sind bevorzugt solche, die über polymerchemisch kompatible funktionelle Gruppen zu jenen der organischen Netzwerkbildner verfügen. So wird im Fall eines Epoxygruppen enthaltenen Silans ein Epoxidharz oder ein aminohaltiges Harz eingesetzt, im Fall von (meth)acrylgruppenhaltigen Silanen werden (Meth)acrylate eingesetzt usw.. Erfolgt die Umsetzung der funktionellen Gruppen der organischen Oligomer/Polymere mit den reaktiven Gruppen R¹ der organischen Netzwerkbildner über Kondensations- oder Additionsmechanismen, so sind die funktionellen Gruppen vorzugsweise entsprechend aufeinander abgestimmt. Beispielsweise können epoxidhaltige Polymere insbesondere gut mit Epoxy- oder Aminofunktionalisierten Silanen umgesetzt werden. Auf diese Weise werden die Polymere durch Alkoxysilane modifiziert und sind damit sehr gut zusammen mit beispielsweise Tetraalkoxysilanen zu anorganisch/organischen Mischschichten umsetzbar.

Beispiele für derart verwendbare Präpolymere/Präoligomere) sind das Epoxidharz D.E.R: 330 (Dow Corning; Rheingaustr. 53 in D-65201 Wiesbaden, Deutschland), sowie Polybutadien-poly(2,3-epoxy)butadien-copolymer (erhältlich von Aldrich, D-89552 Steinheim, Deutschland).

Bei einer weiteren bevorzugten Ausgestaltung der Erfindung erfolgt die organische Oligomer- und/oder Polymerbildung innerhalb eines anorganischen Oxids, indem man lediglich die funktionellen Gruppen der organischen Netzwerkbildner gezielt untereinander polymerisieren läßt. So können beispielsweise Netzwerkbildner, bei denen die polymerisierbare Gruppe R¹ Methacrylat-, Acrylat- oder Vinylgruppen sind, durch Zugabe geeigneter Polymerisationsinitiatoren polymerisiert bzw. oligomerisiert werden.

Auch können beispielsweise epoxydhaltige Silane vor dem Einbau in ein Oxidnetzwerk in einem separaten Schritt untereinander beispielsweise zu oligomeren/polymeren Polyethereinheiten reagieren. Eine Mischung geeigneter epoxy- und aminofunktionalisierter Silane kann beispielsweise vor dem Einbau in die anorganisch/organische Mischschicht wenigstens teilweise unter Bildung von oligomeren/polymeren β-Hydroxyaminen reagieren und dadurch bereits ein quasi zweidimensionales organisches Netzwerk ausbilden.

Diese Silangemische können nach Oligomerisierung und/oder Polymerisierung dann mit dem entstehenden Oxidnetzwerk unter Bildung einer anorganisch/organischen Mischschicht umgesetzt werden.

Derartig gebildete anorganisch/organische Mischschichten weisen vorzugsweise einen geringeren Polymerisationsgrad bei der organischen Komponente auf, als wenn zusätzlich organische Monomere einpolymerisiert, d.h. bei der Polymerisation zusätzlich zugesetzt werden.

Bevorzugt ist daher bei einer weiteren Ausführungsform der Erfindung die zusätzliche Verwendung organischer Monomere zum Aufbau des organischen Netzwerkes.

Um sowohl die vorteilhaften Wirkungen des organischen Oligomers und/oder Polymers als auch des anorganischen Oxidnetzwerkes zuverlässig nutzen zu können, liegt der organische Anteil in der auf einem plättchenförmigen Substrat aufgebrachten anorganisch/organischen Mischschicht erfindungsgemäß in einem Bereich von 4 bis 85 Gew.-%, bevorzugt 5 bis 75 Gew.-% und besonders bevorzugt 10 bis 50 Gew.-%, wobei sich die Angabe Gew.-% auf das Gewicht der gesamten Mischschicht bezieht.

Unterhalb von 4 Gew.-% der organischen Komponente sind die vorteilhaften, d.h. elastizitätsverbessernden Wirkungen des organischen Oligomers und/oder Polymers kaum wirksam. Auf der anderen Seite gehen oberhalb von 85 Gew.-% an organischem Anteil in der Mischschicht die vorteilhaften, d.h. die Abriebsbeständigkeit verbessernden Wirkungen der anorganischen Komponente verloren.

Analytisch auf einfache Weise bestimmbar sind diese Gehalte der organischen Komponenten anhand des C-Gehaltes des Effektpigmentes.

Bei komplexen Schichtaufbauten mit weiteren rein organischen oder anorganischen Schichten empfehlen sich zur Analyse derartiger Schichten Sputtertechniken in Kombination mit oberflächensensitiven analytischen Methoden wie ESCA und/oder SIMS und hier insbesondere TOF-SIMS. Ferner sind NMR-Methoden, wie beispielsweise die C¹³- und Si²⁹-NMR-Spektroskopie zu nennen.

Um die vorteilhaften Wirkungen der anorganischen/organischen Mischschicht im Sinne einer mechanischen Stabilisierung und/oder verstärkter Hydrophobierung zu entfalten, muß die mittlere Dicke der Mischschicht mindestens 2 nm, bevorzugt 3 nm und besonders bevorzugt 10 nm betragen. Unterhalb von 2 nm sind die vorteilhaften Wirkungen der anorganischen/organischen Mischschicht nicht mehr wahrzunehmen.

Die mechanische Stabilisierung der anorganisch/organischen Mischschicht ist auch noch bei sehr hohen Schichtdicken gegeben. Üblicherweise liegt die Schichtdicke der anorganisch/organischen Mischschicht in einem Bereich von etwa 10 nm bis 50 nm. Die vorteilhaften Wirkungen sind jedoch auch noch bei maximalen Schichtdicke von 800 nm, bevorzugt 700 nm und ganz besonders bevorzugt 600 nm vorhanden.
Schichtdicken oberhalb dieser Bereiche erhöhen insgesamt die Dicke der Perlglanzpigmente zu sehr. In diesem Fall ist die Orientierungsfähigkeit der Perlglanzpigmente im Anwendungsmedium, die für die optische Effektbildung wesentlich ist, immer stärker eingeschränkt.

Sollen die erfindungsgemäßen anorganisch/organische Beschichtungen zur Verbesserung der Wetterstabilität der Periglanzpigmenter verwendet werden, so sind geringe Schichtdicken ausreichend und bevorzugt. In diesem Fall kann die Schichtdicke 1,5 bis 10 nm, bevorzugt 2 bis 5 nm betragen.

Die beiden Komponenten der anorganisch/organischen Mischschicht können über die Dicke der Schicht gesehen sowohl homogen verteilt vorliegen als auch inhomogen wie beispielsweise in Form einer Gradientenverteilung, so daß sich das Mischungsverhältnis der beiden Komponenten entlang der Schichtdicke sich ändert. Die oben angegebenen Begrenzungen der Zusammensetzung der Mischschicht gelten im Fall einer inhomogenen Verteilung der einzelnen Komponenten für den Mittelwert entlang der Dicke der Mischschicht. Erfindungsgemäß wird jedoch eine im wesentlichen homogene, bevorzugt homogene, Verteilung von anorganischem Netzwerk und organischem Oligomer und/oder Polymer bevorzugt.

Die organischen Oligomere und/oder Polymere können beispielsweise auch zumindest teilweise in Form von Nanopartikeln in dem anorganischen Netzwerk unter Ausbildung der anorganisch/organischen Mischschicht vorliegen. Es ist aber auch möglich, daß die anorganische Oxidkomponente zumindest teilweise in Form von Nanopartikeln in dem organischen Oligomer und/oder Polymer unter Ausbildung der anorganisch/organischen Mischschicht vorliegen. Gemäß einer weiteren Variante der Erfindung weist die anorganisch/organische Mischschicht im nanoskaligen Bereich einen im wesentlichen homogenen Aufbau auf, so daß die Ausbildung von anorganischen Nanopartikeln in im wesentlichen organischer Umgebung aus Oligomer und/oder Polymer bzw. von organischen Nanopartikeln in Form von Oligomer und/oder Polymer in anorganischer Umgebung weniger häufig vorkommt. Ein homogener Aufbau wird insbesondere bei Verwendung eines hohen Anteils an organischen Netzwerbildnern bei Erzeugung der anorganisch/organischen Mischschicht erhalten.

Als plättchenförmiges transparentes Substrat können alle gängigen kommerziell erhältlichen Perlglanzpigmente eingesetzt werden, wie beispielsweise die nachstehend angeführten. Unter einem plättchenförmigen transparenten Substrat wird im Sinne der Erfindung verstanden, daß die durchschnittliche Transparenz des plättchenförmigen Substrats 1 - 99 %, bezogen auf das einfallende Licht im Wellenlängenbereich von 400 bis 800 nm, beträgt, bevorzugt 10 - 90 %.

Die als plättchenförmiges Substrat verwendbaren Perlglanzpigmente weisen einen plättchenförmigen, transparenten Substratkern auf, welcher vorzugsweise aus der Gruppe, bestehend aus Glimmer, Talkum, Sericit, Kaolin sowie SiO₂-, Glas-, Graphit-, Al₂O₃-Plättchen und deren Mischungen, ausgewählt wird. Bevorzugte Substratkeme sind hierbei natürlicher oder synthetischer Glimmer, SiO₂-, Glas-, oder Al₂O₃-Plättchen.

Der transparente Substratkern besteht bevorzugt aus niedrig brechendem Material, wobei unter niedrigbrechend ein Brechungsindex < 1,8 zu verstehen ist.

Bevorzugt sind SiO₂-, Glas-, oder Al₂O₃-Plättchen als Substratkeme, deren Standardabweichung der Dickenverteilung geringer als 20%, bevorzugt geringer als 15% und besonders bevorzugt geringer als 10% beträgt. Diese Substrate verfügen über besonders glatte Oberflächen. Mit diesen Substraten lassen sich daher besonders farbintensive Perlglanzpigmente mit starken Farbflops herstellen.

Besonders bevorzugt sind hierbei Glasplättchen, da diese am leichtesten herzustellen sind. Ganz besonders bevorzugt ist die mittlere Dicke der Glasplättchen geringer als 1.000 nm, bevorzugt geringer als 500 nm und noch weiter bevorzugt geringer als 350 nm. Derart dünne Glasplättchen eignen sich besonders gut für Automobilanwendungen, da hier die Schichtdicken der Basislackschichten sehr gering sind (12 - 15 µm) und der Trend zu noch geringeren Schichtdicken geht. Derart dünne Substratkeme sind die Voraussetzung für relativ dünne Perlglanzpigmente, die erst sich in derart dünnen Lacksystemen optimal orientieren können. Optimal orientierte Pigmente bewirken auch optimale optische Eigenschaften wie beispielsweise Glanz und Farbflop. Bei Perlglanzpigmenten aus derartigen, dünnen Substratkernen sollte auch die anorganisch/organische Mischschicht vorzugsweise relativ geringe Schichtdicken aufweisen. Die Schichtdicke der anorganisch/organischen Mischschicht liegt hierbei bei 1 bis 50 nm, bevorzugt bei 1,5 bis 10 nm.

Auf diesen - vorzugsweise niedrig brechenden - plättchenförmigen, transparenten Substratkemen werden weitere, bevorzugt hochbrechende, Schichten abgeschieden. Derartige Schichten werden vorzugsweise aus der Gruppe, bestehend aus Metallchalkogeniden, insbesondere Metalloxiden, Metallhydroxiden, Metalloxidhydraten, Metallsuboxiden und Metallsulfiden, Metallfluoriden, Metallnitriden, Metallcarbiden und deren Mischungen, ausgewählt.

Bevorzugt werden die Substratkeme der Perlglanzpigmente mit einem mehrschichtigen Schichtaufbau mit oder aus hochbrechenden Metalloxid, Metallhydroxid, Metallsuboxid und/oder Metalloxidhydrat beschichtet, wobei die Reihenfolge der Schichten variabel ist. Die Metalloxide, Metallhydroxide, Metallsuboxide und/oder Metalloxidhydrate können auch nebeneinander in derselben Schicht vorliegen.

Der Brechungsindex der hochbrechenden Metalloxidschicht ist, um einen guten Periglanzeffekt zu ergeben, größer als 1,8, bevorzugt größer als 2,2, weiter bevorzugt größer als 2,3, noch weiter bevorzugt größer als 2,4, und besonders bevorzugt 2,5 oder größer.

Bevorzugt werden dabei die Substratkerne der Perlglanzpigmente mit einer oder mehreren hochbrechenden Metalloxidschichten aus der Gruppe, bestehend aus oder umfassend TiO₂, Fe₂O₃, Fe₃O₄, TiFe₂O₅, ZnO, SnO₂, CoO, Co₃O₄, ZrO₂, Cr₂O₃ VO₂, V₂O₃, (Sn,Sb)O₂ und deren Mischungen, beschichtet. Besonders bevorzugt sind TiO₂ und/oder Fe₂O₃.
Besonders bevorzugt ist TiO₂ in der Rutilmodifikation.

Bei einer weiteren Ausführungsform weist der mehrschichtige Schichtaufbau eine Schichtenfolge auf, bei dem wenigstens eine hochbrechende Schicht und wenigstens eine niedrig brechende Schicht in alternierender Weise auf einem Substratkern angeordnet sind.

Bei der alternierenden Anordnung ist es auch möglich, ein oder mehrere hochbrechende Schichten unmittelbar übereinander und nachfolgend ein oder mehrere niedrig brechende Schichten unmittelbar übereinander anzuordnen. Wesentlich ist jedoch, dass in dem Schichtaufbau hoch und niedrig brechende Schichten vorkommen.

Bevorzugt ist, dass der mehrschichtige Schichtaufbau eine Schichtenfolge aufweist, bei dem wenigstens eine hoch brechende Schicht, wenigstens eine niedrig brechende Schicht und wenigstens eine hoch brechende Schicht auf einem Substratkern nacheinander angeordnet sind:
Auch bei dieser Variante können ein oder mehrere niedrig bzw. hoch brechende Schichten jeweils unmittelbar übereinander angeordnet sein. Wesentlich ist jedoch, dass in dem Schichtaufbau von innen nach außen hoch und niedrig und wiederum hoch brechende Schichten angeordnet sind.

Vorzugsweise enthält oder besteht die wenigstens eine hochbrechende Schicht aus Metalloxid und/oder Metallhydroxid aus der Gruppe, bestehend aus TiO₂, Fe₂O₃, Fe₃O₄, TiFe₂O₅, ZnO, SnO₂, CoO, Co₃O₄, ZrO₂, Cr₂O₃ VO₂, V₂O₃, (Sn,Sb)O₂ und deren Mischungen. Die niedrig brechende Schicht enthält oder besteht vorzugsweise aus Metalloxid und/oder Metallhydroxid aus der Gruppe, bestehend aus SiO₂, Al₂O₃, B₂O₃ und Mischungen davon.

Perlglanzpigmente, die hoch und niedrig brechende Schichten aufweisen, ergeben besonders intensive Interferenzfarben. Insbesondere Perlglanzpigmente mit hoch brechenden und einer niedrig brechenden und wiederum einer hoch brechenden Schicht sind besonders bevorzugt. Eine Schichtfolge mit oder aus TiO₂ / SiO₂ / TiO₂ und optional noch einer Schicht mit Fe₂O₃ können intensive Goldtöne ergeben und sind besonders bevorzugt.

Bei einer weiteren Ausführungsform bestehen die plättchenförmige Substrate aus Glassplättchen als Substratkernen, welche beidseitig mit semitransparenten Metallschichten beschichtet sind.

Die Metalle der semitransparenten Metallschichten sind bevorzugt aus der Gruppe bestehend aus Silber, Aluminium, Chrom, Nickel, Gold, Platin, Palladium, Kupfer, Zink, deren Mischungen und deren Legierungen, ausgewählt. Die Dicken der semitransparenten Schichten liegen vorzugsweise in einem Bereich von ca. 2 bis ca. 30 nm, weiter bevorzugt von ca. 5 bis ca. 20 nm.

Als plättchenförmige Substrate, welche erfindungsgemäß mit der anorganisch/organischen Mischschicht versehen werden, werden vorzugsweise folgende plättchenförmige Substrate verwendet:
- TiO₂ und/oder Eisenoxid beschichteten Glimmerplättchen,
- TiO₂ und/oder Eisenoxid beschichteten Glasplättchen,
- TiO₂ und/oder Eisenoxid beschichteten Aluminiumoxidplättchen,
- TiO₂ und/oder Eisenoxid beschichteten SiO₂-Plättchen,
- Bismutoxychloridplättchen,
- reine TiO₂-Plättchen
sowie Mischungen all dieser plättchenförmigen Substrate.

Bevorzugt werden bei der vorliegenden Erfindung mit TiO₂ beschichtete Substratkerne mit der vorstehend beschriebenen anorganisch/organischen Mischschicht versehen. Mit TiO₂ und / oder Eisenoxid beschichtete Glimmerpigmente sind beispielsweise unter dem Namen PHOENIX^{®} (Fa. Eckart) im Handel erhältlich. Mit TiO₂ und/oder Fe₂O₃ beschichtete Al₂O₃-Flakes werden unter dem Handelsnamen Xirallic^{®} und entsprechend beschichtete SiO₂-Flakes unter dem Handelsnamen Colorstream^{®} von der Fa. Merck angeboten. Mit TiO₂ und / oder Eisenoxid beschichtete Glasflakes werden z.B. von der Fa. Engelhard, USA unter der Bezeichnung Firemist^{®} oder von der Fa. Merck, Darmstadt, unter der Bezeichnung MIRAVAL^{®} angeboten. Auch mehrschichtige Interferenzpigmente, wie sie z.B. in der DE 19618569 beschrieben werden, bestehend aus einem Trägermaterial, das mit alternierenden Schichten von Metalloxiden mit niedriger und hoher Brechzahl beschichtet ist, können erfindungsgemäß beschichtet werden.

Plättchenförmig sind die Substrate, die einen Formfaktor (Verhältnis des Mittelwertes der Längsausdehnung zur Dicke) von 3 bis 10.000, bevorzugt von 5 bis 5.000 und ganz besonders bevorzugt von 10 bis 4.500 haben.
Die Größenverhältnisse der plättchenförmigen Substrate werden charakterisiert durch den Mittelwert (d₅₀-Wert) der Summenverteilungskurve, wie sie üblicherweise mit Laserbeugungsmethoden gemessen werden. Hierbei sind bevorzugt Größen mit einem d₅₀ von 0,5 bis 2.000 µm, besonders bevorzugt von 1 bis 1.500 µm und ganz besonders bevorzugt von 2 bis 1.000 µm.

Bei weiteren erfindungsgemäßen Weiterbildungen können die transparenten Substrate zunächst mit einer oder mehreren Beschichtungen, die entweder nur anorganischer oder nur organischer Natur sind, versehen werden, bevor die Mischschicht aufgebracht wird. Die Herstellung solcher Schichten ist dem Fachmann bestens bekannt.

Bevorzugt sind hierbei Metalloxidschichten. Besonders bevorzugt sind Metalloxidschichten, die SiO₂ enthalten oder daraus bestehen.
Eine weitere bevorzugte Variante besteht aus einer Ceroxidschicht, die von einer SiO₂-Schicht gefolgt wird. Derartige Schichtfolgen sind insbesondere bei wetterstabilen Perlglanzpigmenten äußerst vorteilhaft.

Bei zusätzlichen erfindungsgemäßen Weiterbildungen können auf die anorganisch/organischen Mischschichten weitere rein anorganische und/oder rein organische Beschichtungen aufgebracht werden. Die Herstellung solcher Schichten ist dem Fachmann ebenfalls bestens bekannt.

Bevorzugt sind hierbei ebenfalls Metalloxidschichten. Besonders bevorzugt sind Metalloxidschichten, die SiO₂ enthalten oder daraus bestehen.

Die Schichtdicken der rein anorganischen oder organischen Schichten liegen zwischen 2 und 1.000 nm, bevorzugt zwischen 5 und 500 nm und ganz besonders bevorzugt zwischen 7 und 50 nm.

Unter "rein anorganischen" Schichten werden hier Schichten mit einem organischen Anteil unterhalb von 4 Gew-% verstanden. Unter "rein organischen" Schichten versteht man Schichten mit einem anorganischen Anteil unterhalb von 4 Gew.-%. Die vorstehenden Angaben in Gew.-% beziehen sich jeweils auf das Gewicht der jeweiligen Schicht.

Die Reaktionsbedingungen für die Beschichtung mit rein anorganischen oder organischen Schichten vor oder nach Aufbringen der Mischschicht können ggf. von jenen, wie sie für die Mischschichtbildung nötig sind, abweichen. So kann beispielsweise die Reaktionstemperatur, das Lösemittel oder der pH-Wert verändert werden. Dies kann ggf. vor oder nach dem Auffällen der anorganischen/organischen Mischschicht auf dem Substrat einen Abbruch der Reaktion und eine Aufarbeitung des Vorproduktes beispielsweise durch Filtrieren und Trocknen im Vakuum erfordern. Bevorzugt jedoch wird die Beschichtung mit einer rein anorganischen Schicht bzw. ein rein organischen Schicht im gleichen Medium wie die Beschichtung mit der anorganisch-organischen Mischschicht als Eintopfreaktion durchgeführt werden.

Es zeigte sich überraschenderweise, daß die anwendungstechnischen Vorteile der erhöhten mechanischen Stabilität der anorganisch/organischen Mischschicht weitgehend unabhängig davon sind, ob weitere rein anorganische oder rein organische Schichten zwischen transparentem Substrat und Mischschicht und/oder auf der Mischschicht selbst vorhanden sind. Es kann von Vorteil sein, bei der Beschichtung zunächst nur mit der anorganischen Komponente zu beginnen. Auf diese Weise kann eine bessere Haftung der danach folgenden Mischschicht auf dem Substrat bewirkt werden. Dies gilt insbesondere, wenn die Mischschicht sehr hydrophobe Bestandteile, wie beispielsweise organische fluorierte Funktionalitäten, aufweist.

Eine weitere Beschichtung der Mischschicht mit einer beispielsweise reinen Oxidschicht ist ebenfalls vorteilhaft. Auf dieser Oxidschicht kann eine gewünschte Oberflächenmodifizierung unter Umständen sehr viel besser durchgeführt werden, als dies bei der Mischschicht gegebenenfalls möglich ist. Dies gilt insbesondere, wenn die Mischschicht sehr hydrophobe Bestandteile aufweist und/oder einen sehr hohen Anteil an organischem Oligomer und/oder Polymer aufweist (z.B. > Gew.-20%).

Bei einer rein anorganischen Beschichtung aus Metalloxiden/hydroxiden werden diese aus Oxiden, Metalloxidhydraten, Suboxiden und/oder Hydroxiden der Elemente Silizium, Titan, Aluminium, Zirkonium, Eisen, Kupfer, Zinn, Kobalt, Chrom, Cer, Nickel, Zinn, Vanadium, Tantal, Yttrium, Molybdän und Wolfram und deren Mischungen ausgewählt. Die Fällung einer solchen Schicht auf Perlglanzpigmente ist dem Fachmann bestens bekannt. Sie verläuft nach folgendem allgemeinen Verfahren:
(a) Das plättchenförmige Substrat wird in einem Lösemittel dispergiert und auf Reaktionstemperatur gebracht.
(b) Sodann erfolgt die Zugabe einer oder mehrerer Metallverbindung(en) der Formel MXₙ, Einstellung eines geeigneten pH-Bereiches durch Zugabe geeigneter Säuren oder Basen und ggf. Zugabe von Wasser. M, X und n haben dabei dieselben Bedeutungen wie oben ausgeführt. Darüber hinaus kann M noch für Cu, Co, Ni, Sn, V, Ta, Y, Mo, und W stehen. Ggfs. kann die Oxidschicht auch im Anschluss an die Abscheidung der anorganisch/organischen Mischschicht im gleichen Lösemittel auf die anorganisch/organische Mischschicht gefällt werden.
(c) Die Reaktion wird eine gewisse Zeitspanne lang weitergeführt und anschließend auf Raumtemperatur abgekühlt. Das Produkt wird nachfolgend vom Lösemittel getrennt.

Bei einer rein organischen Beschichtung kann diese beispielsweise aus Poly(meth)acrylaten, Polyestern, Polyurethanen, Polyolen, Polyethern oder Polyamiden bestehen. Die Fällung einer solchen Schicht auf Perlglanzpigmente ist dem Fachmann ebenfalls bestens bekannt. Sie verläuft nach folgendem allgemeinen Verfahren:
(a) Das plättchenförmige Substrat wird in einem Lösemittel dispergiert und die Suspension auf Reaktionstemperatur gebracht.
(b) Sodann erfolgt die Zugabe und/oder das Zutropfen einer oder mehrerer organischer Monomere und ggf. Polymerisationsinitiatoren, wodurch eine organische Polymerschicht gebildet wird. Vor der Aufbringung der organischen Polymerschicht kann optional ein geeigneter Haftvermittler hinzugegeben werden, um eine bessere Anbindung des Polymeren an die Oberfläche des Perlglanzpigmentes zu gewährleisten, wie dies aus der DE 40 30 727 bekannt ist.
(c) Das beschichtete Pigment wird schließlich vom Reaktionsmedium abgetrennt.

Bei zusätzlichen erfindungsgemäßen Weiterbildungen können die Periglanzpigmente, die eine anorganisch/organische Mischschicht aufweisen, mit einem Oberflächenmodifizierungsmittel versehen werden. Derartige Oberflächenmodifizierungsmittel sind beispielsweise bereits aus der DE 198 20 112 bekannt. Mit diesem Oberflächenmodifizierungsmittel können die Perlglanzpigmente in ihren anwendungstechnischen Eigenschaften kompatibel zum jeweils verwendeten Applikationsmedium, beispielsweise einem Lack oder einer Druckfarbe, gestaltet werden. Eine Verbesserung der mechanischen Stabilisierung einer Beschichtung allein durch eine Oberflächenmodifizierung kann jedoch nicht erreicht werden.

Ggf. kann die Zugabe des Oberflächenmodifizierungsmittels auch im Anschluss an die Fällung der anorganisch/organischen Mischschicht oder der Fällung einer oder mehrerer weiterer anorganischer Schichten im gleichen Lösemittel erfolgen. Auch kann das Oberflächenmodifizierungsmittel in einem geeigneten Lösemittel gelöst und anschließend in einem Mischer auf die Perlglanzpigmente aufgebracht werden. Auch ist es möglich, das Oberflächenmodifizierungsmittel ggf. in trockener Form auf das erfindungsgemäße Perlglanzpigmente aufzubringen, wie beispielsweise durch Sprühtrocknung.

Das erfindungsgemäße Verfahren zur Herstellung von Perlglanzpigmenten mit anorganisch/organischer Mischschicht umfasst bei einer Variante die folgenden Schritte:
(a) Bereitstellen einer Reaktionsmischung von plättchenförmigen metallischen Substraten in einer Flüssigphase,
(b1) Zugeben wenigstens eines anorganischen Netzwerkbildners zu der Reaktionsmischung von Schritt (a),
(c1) Hydrolysieren und/oder Kondensieren des in Schritt (b1) zugegebenen anorganischen Netzwerkbildners,
(d1) Zugeben wenigstens eines reaktiven organischen Netzwerkbildners und wenigstens einer reaktiven organischen Komponente vor, während und/oder nach der Hydrolyse und/oder Kondensation von Schritt (c1),
oder
(b2) Zugeben wenigstens eines reaktiven organischen Netzwerkbildners und wenigstens einer reaktiven organischen Komponente zu der Reaktionsmischung von Schritt (a),
(c2) Zugeben wenigstens eines anorganischen Netzwerkbildners zu der Reaktionsmischung von Schritt (b2),
(d2) Hydrolysieren und/oder Kondensieren des in Schritt (c2) zugegebenen anorganischen Netzwerkbildners,
und
(e) Umsetzen von hydrolysiertem und/oder kondensiertem anorganischen Netzwerkbildner mit dem reaktiven organischen Netzwerkbildner sowie der reaktiven organischen Komponente unter gleichzeitigem und/oder nachfolgendem Abscheiden einer anorganisch/organischen Mischschicht auf den plättchenförmigen Substraten, wobei die Mischschicht wenigstens teilweise ein anorganisches Netzwerk, das eine oder mehrere anorganische Oxidkomponente(n) aufweist, und wenigstens eine organische Komponente aufweist, wobei die organische Komponente ein organisches Oligomer und/oder Polymer ist, welches wenigstens teilweise mit dem anorganischen Netzwerk kovalent verbunden ist,
(f) optional Abtrennen der in Schritt (e) beschichteten plättchenförmigen Substrate von der Reaktionsmischung.

Das erfindungsgemäße Verfahren kann gemäß einer Variante mithin auf Basis der Schritte (a), (b1), (c1), (d1), (e) sowie (f) oder auf Basis der Schritte (a), (b2), (c2), (d2), (e) sowie (f) durchgeführt werden.

Bevorzugt wird die wenigstens eine reaktive organische Komponente in Form von reaktiven polymerisierbaren organischen Monomeren, Oligomeren und/oder Polymeren zugegeben.

Weiterhin ist bevorzugt, daß als reaktive organische Komponente wenigstens ein reaktives Oligomer und/oder Polymer zugegeben wird.

Gemäß einer bevorzugten Weiterbildung des erfindungsgemäßen Verfahrens wird das reaktive Oligomer und/oder Polymer aus der Gruppe, die aus Polyacrylaten, Polymethacrylaten, Polyethern, Polyestern, Polyaminen, Polyamiden, Polyolen, Polyurethanen, Polyolefinen und Mischungen davon besteht, ausgewählt wird und optional zur Aktivierung vor Zugabe in die Reaktionsmischung oder in die Flüssigphase mit einem organischen Netzwerkbildner umgesetzt.

Weiterhin ist bevorzugt, daß die reaktive organische Komponente vor Zugabe in gebildet wird, indem ein oder mehrere verschiedene organische Netzwerkbildner mit reaktiven Gruppen R¹ untereinander, optional unter Zusatz von Polymerisationsinitiatoren, umgesetzt und nachfolgend zugesetzt werden.

Vorzugsweise wird das reaktive organische Oligomer und/oder Polymer aus der Gruppe, die aus Silanol- und/oder Methoxyterminierten Siliconen, Polyarylalkylsilsesquioxanen, Trialkoxysilan-modifizierten Polyethyleniminen und Aminosilan-modifizierten Polyethylenoxidurethanen besteht, ausgewählt.

Gemäß einer weiteren Variante des erfindungsgemäßen Verfahrens wird das reaktive organische Oligomer und/oder Polymer aus der Gruppe, die aus Polyacrylaten, Polymethacrylaten, Polyether, Polyester, Polyamine, Polyamide, Polyole, Polyurethane und Polyolefine besteht, ausgewählt, wobei diese Oligomere und/oder Polymere über reaktive, nicht polymerisierte Funktionen verfügen.

Bei einer weiteren Variante des erfindungsgemäßen Verfahrens wird vor, während und/oder nach dem Zugeben der reaktiven organischen Komponente zusätzlich wenigstens ein organischer Netzwerkwandler zugegeben wird.

Im übrigen wird im Hinblick auf das erfindungsgemäße Verfahren zu den Ausführungen zu den erfindungsgemäßen Periglanzpigmenten entsprechend verwiesen.

Als Flüssigphase können hierbei wässrige und/oder organische Lösungsmittel oder Lösungsmittelgemische verwendet werden. Bevorzugt sind organische Lösungsmittel in Form von alkoholischen Lösungen, die einen Wassergehalt von 1 bis 80 Gew.-%, bevorzugt 2 bis 30 Gew.-% und besonders bevorzugt 3 bis 10 Gew.-% besitzen. Ein Gehalt von mindestens 1 Gew.-% Wasser ist nötig, um die organischen und anorganischen Netzwerkbildner zu hydrolysieren. Die Angabe Gew.-% bezieht sich jeweils auf das Gesamtgewicht des Lösemittels.

Als organische Lösemittel können alle gängigen Lösemittel wie Alkohole, Ether, Ketone, Ester, Glykole oder Kohlenwasserstoffe oder deren Mischungen verwendet werden. Als bevorzugte Alkohole werden beispielsweise Methanol, Ethanol, n-Propanol, Isopropanol, n-Butanol oder 2-Butanol oder deren Mischungen verwendet.

Die Schritte (b) bis (e) der Beschichtungsreaktion finden bei Reaktionstemperaturen in einem Bereich von etwa 0°C bis etwa 100°C, bevorzugt von etwa 10°C bis etwa 80°C statt. Die Reaktionstemperaturen sind durch den Siedepunkt des verwendeten Lösemittels oder Lösemittelgemisches begrenzt.

Der pH-Wert bei den Schritten (b) bis (e) liegt in einem Bereich von 3 bis 12, bevorzugt von 6 bis 10.

Nach dem optionalen Schritt (f) können die erfindungsgemäß beschichteten Perlglanzpigmente einer Größenklassifikation, beispielsweise durch Sieben, unterzogen werden. Weiterhin können sie in einem geeigneten Aggregat ausgetrocknet werden. Nach dem Abtrennen der Pigmente vom Reaktionsgemisch ist ein Lösemittelwechsel möglich, bei dem ein anderes als für die Reaktion verwendetes Lösungsmittel zum ausgetrockneten Pigmentpulver gegeben wird. Auf diese Weise lassen sich Pasten herstellen, die einen Perlglanzpigmentgehalt von 50 bis 90 Gew.-%, bevorzugt von 60 bis 75 Gew.-% aufweisen, wobei sich die Angabe Gew.-% auf das Gewicht der Paste bezieht.

Die erfindungsgemäß beschichteten Perlglanzpigmente finden Verwendung in Lacken, Farben, Druckfarben, Pulverlacken, Kunststoffen, Sicherheitsdruckfarben, Glas und Keramik, Bautenanstrichen oder Kosmetika. Weiterhin finden sie Verwendung als Lasermarker.

Die folgenden Ausführungsbeispiele sollen die Erfindung weiter erläutern, ohne sie jedoch zu beschränken.

### Beispiele:

### Beispiel 1: Beschichtung von Perlglanzpigmenten

100 g Eisenoxid beschichteter Glimmer (PHOENIX PX 1542, Eckart) wurden in 400 ml Isopropanol dispergiert und auf und auf Siedetemperatur gebracht. Anschließend wurden 10,0 g VE-Wasser zugesetzt. Danach leitete man über einen Zeitraum von 30 min eine Lösung von 15,0 g Tetraethoxysilan in 40,0 g Isopropanol mit einer Dosierpumpe (Ismatec) kontinuierlich ein. Zum gleichen Zeitpunkt wurde die Zugabe der Lösung A (Dosierrate 1,0 ml/min) gestartet. 10 min nach Begin der Tetraethoxysilan-Zugabe wurde zusätzlich eine Lösung B mit ebenfalls 1,0 ml/min eingeleitet. 3 min nach Beginn der Zudosierung von Lösung B und weitere 30 min später gab man jeweils eine Spatelspitze 2,2'-Azo-bis(isobutyrosäurenitril)(AIBN) hinzu. Nach beendeter Zugabe von Lösung B wurde die Reaktionsmischung unter Rückfluß noch 6 h gerührt. Nach langsamem Abkühlen auf Raumtemperatur wurde die Mischung über Nacht weitergerührt. Das Reaktionsprodukt wurde auf einem Büchnertrichter abgetrennt und 6 h im Vakuumtrockenschrank bei 80 °C getrocknet.
Lösung A: 5,0 g 25-ige % wässrige NH₄OH, gelöst in 150 ml Isopropanol.
Lösung B: 0,70 g Dynasylan MEMO, 3,00 g TMPTMA und 0,50 g Allylmethacrylat gelöst in 100 ml Isopropanol.

### Vergleichbeispiel 2: Eisenoxid beschichteter Glimmer (PHOENIX PX 1542, Fa. Eckart), ohne weitere Nachbehandlung.

### Vergleichsbeispiel 3: Beschichtung von Perlglanzpigmenten mit SiO₂:

100 g Eisenoxid beschichteter Glimmer (PHOENIX PX 1542, Eckart wurden in 400 ml Isopropanol dispergiert und auf und auf Siedetemperatur gebracht. Anschließend wurden 10,0 g VE-Wasser zugesetzt. Danach leitete man über einen Zeitraum von 30 min eine Lösung von 15,0 g Tetraethoxysilan in 40,0 g Isopropanol mit einer Dosierpumpe (Ismatec) kontinuierlich ein. Zum gleichen Zeitpunkt wurde die Zugabe der Lösung A (Dosierrate 1,0 ml/min) gestartet. Anschließend wurde die Reaktionsmischung unter Rückfluß noch 6 h gerührt. Nach langsamem Abkühlen auf Raumtemperatur wurde über Nacht weitergerührt. Das Reaktionsprodukt wurde auf einem Büchnertrichter abgetrennt und 6 h im Vakuumtrockenschrank bei 80°C getrocknet.

Lösung A: 5,0 g 25-ig % wässrige NH₄OH, gelöst in 150 ml Isopropanol.

### Vergleichsbeispiel 4:

Kommerziell erhältliches Iriodin 504 Rot der Fa. Merck, Darmstadt.

### Vergleichsbeispiel 5:

Kommerziell erhältliches Mearlin Super Russet 9450 Z (Fa. Engelhard, USA).

### A Herstellung von Perlglanzpigmenten in Polycarbonat durch Schmelzflußextrusion

Ausgehend von unbehandeltem PHOENIX PX 1542, SiO₂-betegtem PHONIX PX 1542 und erfindungsgemäß modifiziertem PHOENIX PX 1542 wurden jeweils 500 g Muster von Polycarbonat-Granulat mit einer 1 %iger Pigmentierung an Perlglanzpigment hergestellt. Das Pigment und der vorgetrocknete Kunststoff wurden dabei im Doppelschneckenextruder bei 260-280 °C vorgranuliert und das resultierende Granulat zur Homogenisierung ein weiteres mal unter den gleichen Bedingungen extrudiert. Hierauf wurden mit der Spritzgußmaschine Step Chips hergestellt und bezüglich Glanz und Transparenz evaluiert.

Die Proben wurden bei verschiedenen Temparaturen extrudiert. Dabei waren sie jeweils für ca. 5 min der Extrusionstemperatur ausgesetzt.

Die Transparenz der Stepchips wurde bei Schichtdicken von 1 mm visuell in Anlehnung an die DIN 53230 beurteilt. Dabei bedeutet:
Note 1: sehr gute Transparenz
Note 2: gute Transparenz
Note 3: mittelmäßige Transparenz
Note 4. schlechte Transparenz
Note 5: sehr schlechte Transparenz

Im Fall mechanisch instabiler Perlglanzpigmente wird unter den Scherbedingungen und Temperaturbelastungen im Extruder ein Teil der Eisenoxidbeschichtung der Perlglanzpigmente sowie eventuell vorhandener Schutzschichten abgerissen.
Auch können die Perlglanzpigmente als Ganzes geschädigt werden, d.h. Teile der Pigmente können abgebrochen werden. Derartige Zerstörungen führen zu einem Feinbruch, der im Kunststoff neben den Perlglanzpigmenten vorhanden ist. Er führt zu verminderter Transparenz und kann mittels eines optischen Mikroskopes betrachtet und beurteilt werden. Die quantitative Beurteilung des Anteils an Feinbruch erfolgte unter einem Mikroskop nach visuellem Eindruck. Die Proben wurden hinsichtlich ihres Feinbruchanteils unterteilt in:
g: gering
m: mittel
h: hoch

**Tabelle 1: Beurteilung der Transparenz und des Feinbruchanteils der Polycarbonat-Stepchips nach jeweils fünf min Haltezeit bei verschiedenen Temperaturen.**

| Probe | Transparenz | | | | | | Anteil Feinbruch | | | | |
|---|---|---|---|---|---|---|---|---|---|---|---|
| | 260°C | 280°C | 300°C | 320°C | 340°C | 360°C | 260°C | 280°C | 300°C | 320°C | 340 °C |
| Beispiel 1 | 1 | 1 | 1 | 1 | 1 | 1 | g | g | g | g | g |
| Vergl. Beispiel 2 | 3 | 4 | 4 | 4 | 4 | 5 | m | h | h | h | h |
| Vergl. Beispiel 3 | 3 | 3 | 3 | 3 | 4 | 4 | m | m | m | m | h |
| Vergl. Beispiel 4 | 3 | 4 | 4 | 4 | 4 | 5 | m | h | h | h | h |
| Vergl. Beispiel 5 | 3 | 3 | 3 | 3 | 4 | 4 | m | m | m | m | |

In Tabelle 1 ist deutlich die wesentlich bessere Transparenz der Kunststoffapplikationen des erfindungsgemäßen Beispiels im Vergleich zu den Vergleichsbeispielen zu erkennen. Der Anteil an Feinbruch ist entsprechend geringer. Zwar findet eine gewisse mechanische Stabilisierung auch durch Beschichtung eines Eisenoxidhaltigen Perlglanzpigmentes mit SiO₂ (Vergleichsbeispiel 3 im Vergleich zu Vergleichsbeispiel 2) statt, jedoch ist die stabilisierende Wirkung der erfindungsgemäßen organisch/anorganischen Mischschicht wesentlich höher.

### Versuche zur Wetterstabilität:

### Beispiel 6:

100 g kommerziell erhältliches, blaues Perlglanzpigment auf Basis von TiO₂ beschichtetem Glimmer der Feinheit 10 - 40 µm (PHOENIX PX 1261, Fa. Eckart) wurden in 400 ml Isopropanol dispergiert und auf und auf Siedetemperatur gebracht. Anschließend wurden 10,0 g VE-Wasser zugesetzt und dann innerhalb einer Stunde eine Lösung aus 2,17 g Cemitrat-Hexahydrat in 100,0 g Isopropanol eingeleitet. Es wurde 15 min nachgerührt und dann über einen Zeitraum von 30 min eine Lösung von 19,0 g Tetraethoxysilan in 40,0 g Isopropanol mit einer Dosierpumpe (Ismatec) kontinuierlich eingeleitet. Zum gleichen Zeitpunkt wurde die Dosierung der Lösung A (Dosierrate 1,0 ml/min) und mittels einer weiteren Dosierpumpe der Lösung B (Dosierrate ebenfalls 1,0 ml/min) gestartet. 3 min nach Beginn der Zudosierung von Lösung B und weitere 30 min später gab man jeweils eine Spatelspitze 2,2'-Azo-bis(isobutyrosäurenitril) (AIBN) hinzu. Nach beendeter Zudosierung von Lösung B wurde die Reaktionsmischung unter Rückfluß noch 6 h gerührt. Nach langsamem Abkühlen auf Raumtemperatur wurde die Mischung über Nacht weitergerührt. Das Reaktionsprodukt wurde auf einem Büchnertrichter abgetrennt und 6 h im Vakuumtrockenschrank bei 80 °C getrocknet.
Lösung A: 5,0 g 25-ige % wässrige NH₄OH, gelöst in 150 ml Isopropanol.
Lösung B: 0,70 g Dynasylan MEMO, 3,00 g TMPTMA und 0,50 g Allylmethacrylat gelöst in 100 ml Isopropanol.

Das Pigment hat einen theoretischen Ce-Gehalt von 0,7 Gew.-% und einen SiO₂-Gehalt von 5,5 Gew.-%. Es wurde ein Kohlenstoffgehalt von 1,2 Gew.-% ermittelt.

### Beispiel 7:

Beschichtung des gleichen Ausgangsmaterials wie bei Beispiel 6. Nach beendeter Zudosierung von Lösung B wurde die Reaktionsmischung jedoch unter Rückfluß noch 4 h gerührt. Dann gab man 1,7 g Dynasylan OCTEO und 1,0 g Dynasylan AMEO hinzu und ließ langsam abkühlen. Das Gemisch wurde über Nacht bei Raumtemperatur gerührt und am nächsten Tag abgenutscht. Das Reaktionsprodukt wurde auf einem Büchnertrichter abgetrennt und 6 h im Vakuumtrockenschrank bei 80°C getrocknet.
Lösung A: 5,0 g 25-ige % wässrige NH₄OH, gelöst in 65 ml Isopropanol.
Lösung B: 0,70 g Dynasylan MEMO, 3,00 g TMPTMA und 0,50 g Allylmethacrylat gelöst in 100 ml Isopropanol.

Das Pigment hat einen theoretischen Cer-Gehalt von 0,7 Gew.-% und einen SiO₂-Gehalt von 6,0 Gew.-%. Es wurde ein Kohlenstoffgehalt von 1,8 Gew.-% ermittelt.

### Beispiel 8: wie Bsp. 6 aber ohne Cer-Abscheidung:

100 g kommerziell erhältliches, blaues Perlglanzpigment auf Basis von TiO₂ beschichtetem Glimmer der Feinheit 10 - 40 µm (PHOENIX PX 1261, Fa. Eckart) wurden in 400 ml Isopropanol dispergiert und auf und auf Siedetemperatur gebracht. Anschließend wurden 10,0 g VE-Wasser zugefügt und dann über einen Zeitraum von 30 min eine Lösung von 19,0 g Tetraethoxysilan in 40,0 g Isopropanol mit einer Dosierpumpe (Ismatec) kontinuierlich eingeleitet. Zum gleichen Zeitpunkt wurde die Dosierung der Lösung A (Dosierrate 1,0 ml/min) und mittels einer weiteren Dosierpumpe der Lösung B (Dosierrate ebenfalls 1,0 ml/min) gestartet. 3 min nach Beginn der Zudosierung von Lösung B und weitere 30 min später gab man jeweils eine Spatelspitze 2,2'-Azo-bis(isobutyrosäurenitril) (AIBN) hinzu. Nach beendeter Zudosierung von Lösung B wurde die Reaktionsmischung unter Rückfluß noch 6 h gerührt. Nach langsamem Abkühlen auf Raumtemperatur wurde die Mischung über Nacht weitergerührt. Das Reaktionsprodukt wurde auf einem Büchnertrichter abgetrennt und 6 h im Vakuumtrockenschrank bei 80°C getrocknet.
Lösung A: 5,0 g 25-ige % wässrige NH₄OH, gelöst in 65 ml Isopropanol.
Lösung B: 0,70 g Dynasylan MEMO, 3,00 g TMPTMA und 0,50 g Allylmethacrylat gelöst in 100 ml Isopropanol.

Das Pigment hat einen theoretischen SiO₂- Gehalt von 5,5 Gew.-%. Es wurde ein Kohlenstoffgehalt von 1,1 Gew.-% ermittelt.

### Beispiel 9: wie Bsp. 8, mit organ. Oberflächenmodifizierung:

Beschichtung des gleichen Ausgangsmaterials wie bei Beispiel 6. Nach beendeter Zudosierung von Lösung B wurde die Reaktionsmischung jedoch unter Rückfluß noch 4 h gerührt. Dann gab man 1,7 g Dynasylan OCTEO und 1,0 g Dynasylan AMEO hinzu und ließ langsam abkühlen. Das Gemisch wurde über Nacht bei Raumtemperatur gerührt und am nächsten Tag abgenutscht. Das Reaktionsprodukt wurde auf einem Büchnertrichter abgetrennt und 6 h im Vakuumtrockenschrank bei 80 °C getrocknet.

Das Pigment hat einen theoretischen SiO₂- Gehalt von 6,0 Gew.-%. Es wurde ein Kohlenstoffgehalt von 1,7 Gew.-% ermittelt.

### Vergleichsbeispiel 10:

Kommerziell erhältliches PHOENIX PX 1261 (Fa. ECKART)

### Vergleichsbeispiel 11:

Kommerziell erhältliches Exterior CFS Mearlin Super Blue 6303 Z (Fa. Engelhardt).

### B UV-Beständigkeit an Rakelabzügen

Dieser Test wurde in Anlehnung an den in der EP 0 870 730 beschrieben UV-Test zur Bestimmung der UV-Aktivität von TiO₂-Pigmenten als ein Schnelltest zur photochemischen Aktivität durchgeführt.
Hierzu wurden 1.0 g der gemäß den Beispielen 6 und 8 ohne organische Oberflächenmodifizierung nachbehandelten erfindungsgemäßen Perlglanzpigmente in 9.0 g eines doppelbindungsreichen melaminhaltigen Lackes eindispergiert. Es wurden Rakelabzüge (Naßschichtdicke: 100 µm) auf kartoniertem Papier angefertigt und diese bei Raumtemperatur getrocknet. Die Rakelabzüge wurden geteilt und jeweils einer der beiden Abschnitte als unbelastetes Vergleichsmuster im Dunkeln gelagert. Anschließend wurden die Proben 150 min lang in einem QUV-Gerät der Fa. Q-Panel mit UV-haltigem Licht (UVA-340 Lampe, Bestrahlungsstärke 1,0 W/m²/nm) bestrahlt. Unmittelbar nach Testende wurden mit einem Farbmessgerät CM-508i der Fa. Minolta Farbwerte der belasteten Prüflinge relativ zum jeweiligen Rückstellmuster ermittelt. Die resultierenden ΔE*-Werte sind, nach der Hunter-L*a*b*-Formel berechnet, in Tab. 2 dargestellt.

Im Test wird im wesentlichen eine graublaue Verfärbung der TiO₂-Schicht des Perlglanzpigmentes in den Rakelabzügen aufgrund von unter UV-Lichteinfluß gebildeten Ti(III)-Zentren beobachtet. Bedingung hierfür ist, dass das Elektronenloch das TiO₂ räumlich verlassen hat und - etwa durch Reaktion mit olefinischen Doppelbindungen des Bindemittels - nicht unmittelbar wieder mit dem verbleibenden Elektron rekombinieren kann. Da eine melaminhaltige Lackschicht die Diffusion von Wasser(dampf) und Sauerstoff an die Pigmentoberfläche deutlich verlangsamt, findet eine Reoxidation der Titan(III)-Zentren deutlich verzögert statt, so dass die Vergrauung gemessen und der DE-Wert als Maß für die Lichtstabilität der Pigmente herangezogen werden kann- Ein größer DE-Zahlenwert der belasteten Probe relativ zum unbelasteten Rückstellmuster bedeutet somit eine geringe Lichtstabilität des untersuchten Pigments.

**Tabelle 2: UV-Rakeltestergebnisse**

| **Probe** | **ΔE*** |
|---|---|
| Beispiel 6 | 1,2 |
| Beispiel 8 | 4,6 |
| Vergleichsbeispiel 10 | 16,6 |
| Vergleichsbeispiel 11 | 2,3 |

Vergleicht man die Farbänderungen ΔE* des sogenannten Rakeltests der blauen Pigmente der erfindungsgemäßen Beispiele mit jenem den Stand der Technik repräsentierenden Vergleichsbeispiel 11, so beobachtet man für Bsp. 6 niedrigere Werte und daher sogar bessere Lichtbeständigkeit.

### C Schwitzwasserbeständigkeit

Die Pigmentproben wurden in ein handelsübliches Wasserlacksystem eingearbeitet und die Prüfapplikationen durch Spritzlackierung hergestellt. Der Basislack wurde mit einem handelsüblichen 1 K-Klarlack überlackiert und anschließend eingebrannt. Die Proben wurden mittels einer Kondenswasserprüfung nach DIN 50017 bewittert und unmittelbar sowie eine Stunde nach Beanspruchungsende bewertet.

Die Bewertung der Blasenbildung erfolgte visuell in Anlehnung an die DIN 53209. Die Bewertungsskala mit den Deskriptoren m (Anzahl der Blasen) und g (Größe der Blasen) reicht von 0 (sehr gut) bis 5 (sehr schlecht; m 5 = sehr viele bzw, g 5 sehr große Blasen).
Der Grad der Quellung sowie der DOI wurden ebenfalls visuell nach DIN 53230 beurteilt (Skala 0-5, 0: nicht verändert, 5: stark verändert).
Die Beurteilung der Adhäsion erfolgte durch Gitterschnittprüfung gemäß DIN 53151.

**Tabelle 3: Evaluierung der Testbleche nach Schwitzwasserbelastung**

| | **Gitterschnitt (Adhäsion)** | **DOI** | **Quellung** | **Blasengrad** |
|---|---|---|---|---|
| Probe | | | | |
| Beispiel 7 (Agm. PHOENIX PX 1261) | 0-1 | 1 | 1 | m2/g1 |
| Beispiel 9 (Agm. PHOENIX PX 1261) | 0 | 1 | 1 | m1/g1 |
| Vergleichsbeispiel 10 (PHOENIX PX 1261) | 3 | 5 | 3 | m5/g1 |
| Vergleichsbeispiel 11 (Engelhard Exterior CFS Mearlin Super Blue 6303Z) | 0 | 0 | 2 | m2/g1 |

Insbesondere die Quellung wird hier von den erfindungsgemäßen Beispielen gegenüber dem Stand der Technik verbessert.

**Tabelle 4: WOM- Testergebnisse**

| **Probe** | **Testdauer (in h)** | **ΔE*** | **Grauskala** |
|---|---|---|---|
| Beispiel 7 | 500 | 0,1 | 5 |
| | 1000 | 0,2 | 5 |
| | 2000 | 0,2 | 5 |
| | 3000 | 0,3 | 4-5 |
| | 4000 | 0,3 | 4-5 |
| Beispiel 9 | 500 | 0,2 | 5 |
| | 1000 | 0,3 | 5 |
| | 2000 | 0,5 | 4-5 |
| | 3000 | 0,8 | 4-5 |
| | 4000 | 1,2 | 4-5 |
| Vergleichsbeispiel 11 (Exterior CFS Mearlin Super Blue 6303Z) | 500 | 0,4 | 5 |
| | 1000 | 0,5 | 5 |
| | 2000 | 0,8 | 4 - 5 |
| | 3000 | 0,8 | 4 - 5 |
| | 4000 | 1,0 | 4 |

Eine erfindungsgemäße Beschichtung vermag daher auch die Wetter- und UV-Stabilität der untersuchten Perlglanzpigmente deutlich zu verbessern, wie ein Vergleich der Versuchsresultate mit dem den Stand der Technik repräsentierenden Vergleichsbeispiel 11 zeigt.

## Patentansprüche

1. Perlglanzpigmente, mit Beschichtung, umfassend ein plättchenförmiges, transparentes Substrat,
**dadurch gekennzeichnet,**
**daß** die Beschichtung wenigstens eine anorganisch/organische Mischschicht umfasst, wobei die Mischschicht wenigstens teilweise ein anorganisches Netzwerk, das eine oder mehrere anorganische Oxidkomponente(n) aufweist, und wenigstens eine organische Komponente aufweist, wobei die organische Komponente ein organisches Oligomer und/oder Polymer ist, welches wenigstens teilweise mit dem anorganischen Netzwerk über einen oder mehrere organische Netzwerkbildner kovalent verbunden ist, wobei
die wenigstens teilweise kovalente Bindung von anorganischer Oxidkomponente und organischem Oligomer und/oder Polymer wenigstens teilweise durch einen oder mehrere organische Netzwerkbildner erfolgt ist, welcher die allgemeine Formel (I)
R¹ₙR²ₘR³ₒSiX₍₄₋ₙ₋ₘ₋ₒ₎ (I)
aufweist, wobei X für eine hydrolysierbare Gruppe, nach deren Hydrolyse eine kovalente Bindung von organischem Netzwerkbildner mit dem anorganischen Netzwerk ausgebildet werden kann, steht
und R¹ für eine reaktive organische Gruppe steht, die mit dem organischen Oligomer und/oder Polymer kovalent verbindbar ist,
R² und R³ unabhängig voneinander jeweils für eine organische Gruppe stehen, die mit dem organischen Oligomer und/oder Polymer kovalent verbindbar sein können,
mit der Maßgabe,
**daß** n, m und o ganze Zahlen sind, wobei n+m+o = 1-3 und n = 1 bis 3, m = 0 bis 2 und o = 0 bis 2 ist,
und/oder die allgemeine Formel (II)
(R¹O)ₙ(R²O)ₘ(R³O)ₒMX₍ₖ₋ₙ₋ₘ₋ₒ₎ (II)
aufweist, wobei die Verbindung wenigstens eine hydrolysierbare Gruppe X, nach deren Hydrolyse eine kovalente Bindung von organischem Netzwerkbildner mit dem anorganischen Netzwerk ausgebildet werden kann, wenigstens einen organischen Rest R¹, der für eine reaktive organische Gruppe steht, die mit dem organischen Oligomer und/oder Polymer kovalent verbindbar ist, und R² und R³ unabhängig voneinander jeweils für eine organische Gruppe stehen können, die mit dem organischen Oligomer und/oder Polymer kovalent verbindbar sein können, wobei
k für die formale Oxidationszahl von M steht,
M für Al, Zr oder Ti steht,
n für eine ganze Zahl von 1 bis (k-1) steht,
m für eine ganze Zahl von 0 bis (k-2) steht,
o für für eine ganze Zahl von 0 bis (k-2) steht, und
wobei n+m+o eine ganze Zahl von 1 bis k-1 ist, wobei R¹ ein reaktiver organischer Rest ist, der einen oder mehrere Substituenten aufweist, die aus der Gruppe, die aus Amino-, Hydroxy-, Thiol-, Epoxy-, Acrylat-, Methacrylat-, Vinyl-, Allyl-, Alkenyl-, Alkinyl-, Carboxy-, Carboxylanhydrid-, Isocyanat-, Cyanat-, Ureido-, Carbamatgruppe und Mischungen davon besteht, ausgewählt werden und wobei R² und R³ unabhängig voneinander aus der Gruppe, die aus H-, (C₁ - C₄₀)-Alkyl-, (C₁ - C₄₀)-fluorierte Alkyl-, (C₁ - C₄₀)-teilfluorierte Alkyl-; (C₂ - C₄₀)-Alkenyl-, (C₂ - C₄₀)-Alkinyl-; (C₆ - C₃₆)-Aryl-, fluorierte (C₆ - C₃₆)-Aryl-, teilfluorierte (C₆ - C₃₆)-Aryl-; (C₇-C₄₀)-Alkylaryl-, (C₇ - C₄₀)-Arylalkyl-, fluorierte (C₇ - C₄₀)-Alkylaryl-, teilfluorierte (C₇-C₄₀)-Alkylaryl-; -(C₈-C₄₀)-Alkenylaryl-, (C₈-C₄₀)-Arylalkinyl-, (C₈-C₄₀)-Alkinylaryl-; (C₅-C₄₀)-Cycloalkyl-, (C₆-C₄₀)-Alkylcycloalkyl-, (C₆-C₄₀)-Cycloalkylalkylsilane, die jeweils mit Amino-, Hydroxy-, Thiol-, Epoxy-, Acrylat-, Methacrylat-, Vinyl-, Allyl-, Alkenyl-, Alkinyl-, Carboxy-, Carboxylanhydrid-, Isocyanat-, Cyanat-, Ureido-, Carbamat- und/oder Estergruppe substituiert sein und in den Kohlenstoffketten und Kohlenstoffringsystemen O, N und S als Heteroatome enthalten können, und Mischungen davon besteht, ausgewählt werden und wobei der organische Anteil in der auf dem plättchenförmigen Substrat aufgebrachten Mischschicht in einem Bereich von 4 bis 85 Gew.-% liegt, bezogen auf das Gewicht der gesamten Mischschicht.

2. Perlglanzpigmente nach Anspruch 1,
**dadurch gekennzeichnet,**
**daß** die anorganische Oxidkomponente der Mischschicht aus der Gruppe, die aus Metalloxid, Metallsuboxid, Metallhydroxid, Metalloxidhydrat und Mischungen davon besteht, ausgewählt wird.

3. Perlglanzpigmente nach Anspruch 2,
**dadurch gekennzeichnet,**
**daß** die anorganische Oxidkomponente der Mischschicht aus Metalloxid und/oder Metallsuboxid und/oder Metalloxidhydrat und/oder Metallhydroxid von Elementen aus der Gruppe, die aus Silizium, Aluminium, Titan, Zirkonium, Eisen, Cer, Chrom, Mangan, Zink, Zinn, Antimon, Bor und Magnesium und deren Mischungen besteht, ausgewählt wird.

4. Perlglanzpigmente nach einem der Ansprüche 1 bis 3,
**dadurch gekennzeichnet,**
**daß** der organische Netzwerkbildner ein Silan gemäß der allgemeinen Formel (I) ist, wobei die hydrolysierbare(n) Gruppe(n) X unabhängig voneinander aus der Gruppe, die aus Halogen, Hydroxy, Alkoxy mit 1-10 C-Atomen, welche geradkettig oder verzweigt sein können, und Mischungen davon besteht, ausgewählt wird.

5. Perlglanzpigmente nach einem der Ansprüche 1 bis 3,
**dadurch gekennzeichnet,**
**daß** der organische Netzwerkbildner die allgemeine Formel (II) besitzt, wobei die hydrolysierbare(n) Gruppe(n) X unabhängig voneinander aus der Gruppe, die aus Halogen, Hydroxy, Alkoxy mit 1-20 C-Atomen, welche geradkettig oder verzweigt sein können und Heteroatome, vorzugsweise O, S und/oder N, in der Kohlenstoffkette aufweisen können, und Mischungen davon besteht, ausgewählt wird.

6. Perlglanzpigmente nach einem der vorhergehenden Ansprüche,
**dadurch gekennzeichnet,**
**daß** das organische Oligomer und/oder Polymer aus Monomeren aufgebaut ist, die mit Funktionalitäten aus der Gruppe, die aus Amino-, Hydroxy-, Thiol-, Epoxy-, Acrylat-, Methacrylat-, Vinyl-, Allyl-, Alkenyl-, Alkinyl-, Carboxy-, Carboxylanhydrid-, Isocyanat-, Cyanat-, Ureido- und Carbamatgruppe und Mischungen davon besteht, ausgestattet sind.

7. Periglanzpigmente nach einem der Ansprüche 1 bis 5,
**dadurch gekennzeichnet,**
**daß** die organische Komponente aus reaktiven organischen Oligomeren und/oder Polymeren aufgebaut ist, welche reaktionsfähige Gruppen aufweisen, die an das anorganische Netzwerk und/oder mindestens an die Gruppe R¹ der organischen Netzwerkbildner anbinden können.

8. Perlglanzpigmente nach Anspruch 7,
**dadurch gekennzeichnet,**
**dass** das reaktive organische Oligomer und/oder Polymer aus der Gruppe, die aus Trialkoxysilan-modifizierten Polyethyleniminen, und Aminosilan-modifizierten Polyethylenoxidurethanen und Mischungen davon besteht, ausgewählt wird.

9. Perlglanzpigmente nach Anspruch 7,
**dadurch gekennzeichnet,**
**dass** das reaktive organische Oligomer und/oder Polymer aus der Gruppe, die aus Polyacrylaten, Polymethacrylaten, Polyethern, polyestern, Polyaminen, Polyamiden, Polyolen, Polyurethanen und Polyolefinen besteht, ausgewählt wird, wobei diese Oligomere und/oder Polymere reaktive funktionelle Gruppen aufweisen, die an das anorganische Netzwerk oder einen organischen Netzwerkbildner binden können.

10. Perlglanzpigmente nach einem der Ansprüche 1 bis 9,
**dadurch gekennzeichnet,**
**daß** das organische Oligomer und/oder Polymer über die funktionellen Gruppe R¹ eines oder mehrerer organische Netzwerkbildner in der anorganisch/organischen Mischschicht kovalent gebunden ist.

11. Perlglanzpigmente nach einem der Ansprüche 1 bis 10,
**dadurch gekennzeichnet,**
**daß** das Substrat aus der Gruppe, die aus Perlglanzpigmenten, mit Oxiden oder Mischoxiden beschichteten Perlglanzpigmenten, Titandioxidplättchen, Eisenoxidplättchen und Bismuthoxychloridpigmenten besteht, ausgewählt wird.

12. Perlglanzpigmente nach einem der vorhergehenden Ansprüche,
**dadurch gekennzeichnet,**
**daß** zwischen Substrat und anorganisch/organischen Mischschicht wenigstens eine separate im wesentlichen rein anorganische Schicht und/oder wenigstens eine separate Schicht aus im wesentlichen rein organischem Polymer angeordnet ist.

13. Perlglanzpigmente nach einem der vorhergehenden Ansprüche,
**dadurch gekennzeichnet,**
**daß** auf der anorganisch/organischen Mischschicht wenigstens eine separate im wesentlichen rein anorganische Schicht und/oder wenigstens eine separate Schicht aus im wesentlichen rein organischem Polymer angeordnet ist.

14. Perlglanzpigmente nach Ansprüchen 12 oder 13,
**dadurch gekennzeichnet,**
**daß** die separaten im wesentlichen rein anorganischen Schichten aus Metalloxid und/oder Metalloxidhydrat und/oder Metallsuboxid und/oder Metallhydroxid von Elementen, die aus der Gruppe, die aus Silizium, Titan, Aluminium, Zirkonium, Eisen, Kupfer, Zinn, Kobalt, Chrom, Cer, Zink, Antimon, Mangan, Nickel, Yttrium, Molybdän, Vanadium, Tantal, Wolfram und deren Mischungen besteht, ausgewählt werden, hergestellt sind.

15. Perlglanzpigment nach Ansprüchen 12 oder 13,
**dadurch gekennzeichnet,**
**daß** die wenigstens eine separate im wesentlichen rein organische Polymerschicht aus der Gruppe, die aus Polyacrylat, Polymethacrylat, Polyether, Polyester, Polyamin, Polyamid, Polyol, Polyurethan, Polyphenolformaldehyd, Polyolefin, Poly-1,2,3,4,-tetrafluorethylen und Mischungen davon besteht, ausgewählt wird.

16. Perlglanzpigment nach einem der vorhergehenden Ansprüche,
**dadurch gekennzeichnet,**
**daß** auf der Oberfläche des beschichteten Perlglanzpigmentes eine zusätzliche Schicht mit einem oder mehreren Oberflächenmodifizierungsmittel aufgebracht ist.

17. Perlglanzpigment nach einem der vorherigen Ansprüche,
**dadurch gekennzeichnet,**
**dass** das plättchenförmige Substrat aus der Gruppe, die aus
TiO₂ und/oder Eisenoxid beschichteten Glimmerplättchen,
TiO₂ und/oder Eisenoxid beschichteten Glasplättchen,
TiO₂ und/oder Eisenoxid beschichteten Aluminiumoxidplättchen,
TiO₂ und/oder Eisenoxid beschichteten SiO₂-Plättchen,
Bismutoxychloridplättchen,
reinen TiO₂-Plättchen und
Mischungen davon
besteht, ausgewählt wird.

18. Verfahren zur Herstellung eines Perlglanzpigmentes mit anorganisch/organischer Mischschicht, das die folgenden Schritte umfasst:
- Umsetzen wenigstens eines anorganischen Netzwerkbildners und wenigstens eines organischen Netzwerkbildners und wenigstens einer reaktiven organischen Komponente in einer Flüssigphase unter Ausbildung einer Beschichtungszusammensetzung,
- Aufbringen der Beschichtungszusammensetzung auf plättchenförmige transparente Substrate als Mischschicht,
wobei die plättchenförmigen transparenten Substrate vor, während oder nach dem Zugeben oder Umsetzen des wenigstens einen anorganischen Netzwerkbildners und des wenigstens einen organischen Netzwerkbildners und der wenigstens einen reaktiven organischen Komponente zu der Flüssigphase zugegeben werden,
wobei die Mischschicht wenigstens teilweise ein anorganisches Netzwerk, das eine oder mehrere anorganische Oxidkomponente(n) aufweist, und wenigstens eine organische Komponente aufweist, wobei die organische Komponente ein organisches Oligomer und/oder Polymer ist, welches wenigstens teilweise mit dem anorganischen Netzwerk kovalent verbunden ist, wobei der wenigstens eine organische Netzwerkbildner die allgemeine Formel (I)
R¹ₙR²ₘR³ₒSiX₍₄₋ₙ₋ₘ₋ₒ₎ (I)
aufweist, wobei X für eine hydrolysierbare Gruppe, nach deren Hydrolyse eine kovalente Bindung von organischem Netzwerkbildner mit dem anorganischen Netzwerk ausgebildet werden kann, steht,
und R¹ für eine reaktive organische Gruppe steht, die mit einem organischen Oligomer und/oder Polymer kovalent verbindbar ist,
R² und R³ unabhängig voneinander jeweils für eine organische Gruppe stehen, die mit einem organischen Oligomer und/oder Polymer kovalent verbindbar sein können,
mit der Maßgabe,
**daß** n, m und o ganze Zahlen sind, wobei n+m+o = 1-3 und n = 1 bis 3, m = 0 bis 2 und o = 0 bis 2 ist,
und/oder der wenigstens eine organische Netzwerkbildner
die allgemeinen Formel (II)
(R¹O)ₙ(R²O)ₘ(R³O)ₒMX₍ₖ₋ₙ₋ₘ₋ₒ₎ (II)
aufweiset, wobei die metallorganische Verbindung wenigstens eine hydrolysierbare Gruppe X, nach deren Hydrolyse eine kovalente Bindung von organischem Netzwerkbildner mit dem anorganischen Netzwerk ausgebildet werden kann, wenigstens einen organischen Rest R¹, der für eine reaktive organische Gruppe steht, die mit einem organischen Oligomer und/oder Polymer kovalent verbindbar ist, und R² und R³ unabhängig voneinander jeweils für eine organische Gruppe stehen können, die mit einem organischen Oligomer und/oder Polymer kovalent verbindbar sein können, wobei
k für die formale Oxidationszahl von M steht,
M für Al, Zr oder Ti steht,
n für eine ganze Zahl von 1 bis (k-1) steht,
m für eine ganze Zahl von 0 bis (k-2) steht,
o für für eine ganze Zahl von 0 bis (k-2) steht, und
wobei n+m+o eine ganze Zahl von 1 bis k-1 ist und wobei R¹ ein reaktiver organischer Rest ist, der einen oder mehrere Substituenten aufweist, die aus der Gruppe, die aus Amino-, Hydroxy-, Thiol-, Epoxy-, Acrylat-, Methacrylat-, Vinyl-, Allyl-, Alkenyl-, Alkinyl-, Carboxy-, Carboxylanhydrid-, Isocyanat-, Cyanat-, Ureido-, Carbamatgruppe und Mischungen davon besteht, ausgewählt werden und wobei R² und R³ unabhängig voneinander aus der Gruppe, die aus H-, (C₁ - C₄₀)-Alkyl-, (C₁-C₄₀)-fluorierte Alkyl-, (C₁-C₄₀)-teilfluorierte Alkyl-; (C₂ - C₄₀)-Alkenyl-, (C₂ - C₄₀)-Alkinyl-; (C₆ - C₃₆)-Aryl-, fluorierte (C₆ - C₃₆)-Aryl-, teilfluorierte (C₆-C₃₆)-Aryl-; (C₇-C₄₀)-Alkylaryl-, (C₇-C₄₀)-Arylalkyl-, fluorierte (C₇-C₄₀)-Alkylaryl-, teilfluorierte (C₇-C₄₀)-Alkylaryl-; (C₈-C₄₀)-Alkenylaryl-, (C₈-C₄₀)-Arylalkinyl-, -; (C₈-C₄₀)-Alkinylaryl-; (C₅-C₄₀)-Cycloalkyl-, (C₆-C₄₀)-Alkylcycloalkyl-, (C₆-C₄₀)-Cycloalkylalkylsilane, die jeweils mit Amino-, Hydroxy-, Thiol-, Epoxy-, Acrylat-, Methacrylat-, Vinyl-, Allyl-, Alkenyl-, Alkinyl-, Carboxy-, Carboxylanhydrid-, Isocyanat-, Cyanat-, Ureido-, Carbamat- und/oder Estergruppe substituiert sein und in den Kohlenstoffketten und Kohlenstoffringsystemen O, N und S als Heteroatome enthalten können, und Mischungen davon besteht, ausgewählt werden und wobei der organische Anteil in der auf dem plättchenförmigen Substrat aufgebrachten Mischschicht in einem Bereich von 4 bis 85 Gew.-% liegt, bezogen auf das Gewicht der gesamten Mischschicht.

19. Verfahren zur Herstellung eines Perlglanzpigmentes nach Anspruch 18, das die folgenden Schritte umfasst:
(a) Bereitstellen einer Reaktionsmischung von plättchenförmigen transparenten Substraten in einer Flüssigphase,
(b1) Zugeben wenigstens eines anorganischen Netzwerkbildners zu der Reaktionsmischung von Schritt (a),
(c1) Hydrolysieren und/oder Kondensieren des in Schritt (b1) zugegebenen anorganischen Netzwerkbildners,
(d1) Zugeben wenigstens eines reaktiven organischen Netzwerkbildners und wenigstens einer reaktiven organischen Komponente vor, während und/oder nach der Hydrolyse und/oder Kondensation von Schritt (c1),
oder
(b2) Zugeben wenigstens eines reaktiven organischen Netzwerkbildners und wenigstens einer reaktiven organischen Komponente zu der Reaktionsmischung von Schritt (a),
(c2) Zugeben wenigstens eines anorganischen Netzwerkbildners zu der Reaktionsmischung von Schritt (b2),
(d2) Hydrolysieren und/oder Kondensieren des in Schritt (c2) zugegebenen anorganischen Netzwerkbildners,
und
(e) Umsetzen von hydrolysiertem und/oder kondensiertem anorganischen Netzwerkbildner mit dem reaktiven organischen Netzwerkbildner sowie der reaktiven organischen Komponente unter gleichzeitigem und/oder nachfolgendem Abscheiden der anorganisch/organischen Mischschicht,
(f) optional Abtrennen der in Schritt (e) beschichteten plättchenförmigen Substrate von der Reaktionsmischung.

20. Verfahren gemäß Anspruch 18 oder 19,
**dadurch gekennzeichnet,**
**daß** die reaktive organische Komponente in Form von reaktiven polymerisierbaren organischen Monomeren, Oligomeren und/oder Polymeren zugegeben wird.

21. Verfahren gemäß Anspruch 19,
**dadurch gekennzeichnet,**
**daß** als reaktive organische Komponente wenigstens ein reaktives Oligomer und/oder Polymer zugegeben wird.

22. Verfahren nach einem der Ansprüche 18 bis 21,
**dadurch gekennzeichnet,**
**daß** die anorganische Oxidkomponente der Mischschicht aus der Gruppe, die aus Metalloxid, Metalloxidhydrat, Metallsuboxid, Metallhydroxid und Mischungen davon besteht, ausgewählt wird.

23. Verfahren nach einem der Ansprüche 18 bis 22,
**dadurch gekennzeichnet,**
**daß** die anorganische Oxidkomponente der Mischschicht aus Metalloxid und/oder Metalloxidhydrat und/oder Metallsuboxid und/oder Metallhydroxid von Elementen aus der Gruppe, die aus Silizium, Aluminium, Titan, Zirkonium, Eisen, Cer, Chrom, Mangan, Zink, Antimon, Bor und Magnesium und deren Mischungen besteht, ausgewählt wird.

24. Verfahren nach einem der Ansprüche 18 bis 23,
**dadurch gekennzeichnet,**
**daß** der organische Netzwerkbildner ein Silan gemäß der allgemeinen Formel (I) ist, wobei die hydrolysierbare(n) Gruppe(n) X unabhängig voneinander aus der Gruppe, die aus Halogen, Hydroxy, Alkoxy mit 1-10 C-Atomen, welche geradkettig oder verzweigt sein können, und Mischungen davon besteht, ausgewählt wird.

25. Verfahren nach einem der Ansprüche 18 bis 23,
**dadurch gekennzeichnet,**
**daß** der organische Netzwerkbildner die allgemeine Formel (II) besitzt, wobei die hydrolysierbare(n) Gruppe(n) X unabhängig voneinander aus der Gruppe, die aus Halogen, Hydroxy, Alkoxy mit 1-20 C-Atomen, welche geradkettig oder verzweigt sein können und Heteroatome, vorzugsweise O, S und/oder N, in der Kohlenstoffkette aufweisen können, und Mischungen davon besteht, ausgewählt wird.

26. Verfahren nach einem der Ansprüche 21 bis 25,
**dadurch gekennzeichnet,**
**daß** das reaktive organische Oligomer und/oder Polymer aus reaktiven Monomeren aufgebaut wird, die mit Funktionalitäten aus der Gruppe, die aus Amino-, Hydroxy-, Thiol-, Epoxy-, Acrylat-, Methacrylat-, Vinyl-, Allyl-, Alkenyl- , Alkinyl-, Carboxy-, Carboxylanhydrid-, Isocyanat-, Cyanat-, Ureido- und Carbamatgruppe und Mischungen davon besteht, ausgestattet sind.

27. Verfahren nach einem der Ansprüche 21 bis 25,
**dadurch gekennzeichnet,**
**daß** das reaktive Oligomer und/oder Polymer aus der Gruppe, die aus Polyacrylaten, Polymethacrylaten, Polyethern, Polyestern, Polyaminen, Polyamiden, Polyolen, Polyurethanen, Polyolefinen und Mischungen davon besteht, ausgewählt wird und optional zur Aktivierung vor Zugabe in die Reaktionsmischung mit einem organischen Netzwerkbildner umgesetzt wird.

28. Verfahren nach einem der Ansprüche 18 bis 27,
**dadurch gekennzeichnet,**
**daß** die reaktive organische Komponente vor Zugabe gebildet wird, indem ein oder mehrere verschiedene organische Netzwerkbildner mit reaktiven Gruppen R¹ untereinander, optional unter Zusatz von Polymerisationsinitiatoren, umgesetzt und nachfolgend in zugesetzt werden.

29. Verfahren nach Anspruch 21,
**dadurch gekennzeichnet,**
**daß** das reaktive organische Oligomer und/oder Polymer aus der Gruppe, die Trialkoxysilan-modifizierten Polyethyleniminen und Aminosilan-modifizierten Polyethylenoxidurethanen besteht, ausgewählt wird.

30. Verfahren nach Anspruch 21,
**dadurch gekennzeichnet,**
**dass** das reaktive organische Oligomer und/oder Polymer aus der Gruppe, die aus Polyacrylaten, Polymethacrylaten, Polyether, Polyester, Polyamine, Polyamide, Polyole, Polyurethane und Polyolefine besteht, ausgewählt wird, wobei diese Oligomere und/oder Polymere über reaktive Funktionen verfügen.

31. Verfahren nach einem der Ansprüche 18 bis 30,
**dadurch gekennzeichnet,**
**daß** vor, während und/oder nach dem Zugeben des reaktiven organischen Netzwerkbildners zusätzlich wenigstens ein organischer Netzwerkwandler zugegeben wird.

32. Verfahren gemäß einem der Ansprüche 18 bis 31,
**dadurch gekennzeichnet,**
**daß** vor dem Aufbringen der anorganisch/organischen Mischschicht auf dem plättchenförmigen Substrat eine oder mehrere im wesentlichen rein anorganische und/oder im wesentlichen rein organische Schichten aufgebracht werden.

33. Verfahren gemäß einem der Ansprüche 18 bis 32,
**dadurch gekennzeichnet,**
**daß** nach dem Aufbringen der anorganisch/organischen Mischschicht eine oder mehrere im wesentlichen rein anorganische und/oder im wesentlichen rein organische Schichten aufgebracht werden.

34. Verfahren gemäß einem der Ansprüche 18 bis 33,
**dadurch gekennzeichnet,**
**daß** als äußerste Schicht eine Schicht mit einem oder mehreren Oberflächenmodifizierungsmitteln aufgebracht wird.

35. Verfahren gemäß einem der Ansprüche 18 bis 34,
**dadurch gekennzeichnet,**
**daß** als Reaktionsmedium wässrige und/oder alkoholische Lösungen oder Lösungsmittelgemische verwendet werden.

36. Verfahren gemäß einem der Ansprüche 19 bis 35,
**dadurch gekennzeichnet,**
**daß** die Reaktionstemperatur bei den Schritten (b) bis (e) in einem Bereich von etwa 0°C bis etwa 100°C, bevorzugt von etwa 10°C bis etwa 80°C, liegt.

37. Verfahren gemäß einem der Ansprüche 19 bis 36,
**dadurch gekennzeichnet,**
**daß** der pH-Wert bei den Schritten (b) bis (e) in einem Bereich von 1,5 bis 12, bevorzugt von 6 bis 10, liegt.

38. Verwendung des plättchenförmigen Perlglanzpigments nach einem der Ansprüche 1 bis 17 in Lacken, Farben, Druckfarben, Pulverlacken, Bautenanstrichen, Kunststoffen, Sicherheitsdruckfarben, Keramiken, Glas oder kosmetischen Zubereitungen.

39. Verwendung eines plättchenförmigen Perlglanzpigments nach einem der Ansprüche 1 bis 17 als Lasermarker.

## Claims

1. Pearlescent pigments with coating, comprising a platelet-shaped, transparent substrate,
**characterized in that**
the coating comprises at least one hybrid inorganic/organic layer, the hybrid layer having at least partly an inorganic network that has one or more inorganic oxide components, and having at least one organic component, the organic component being an organic oligomer and/or polymer which is covalently bonded at least partly to the inorganic network via one or more organic network formers, and the at least partial covalent bonding of inorganic oxide component and organic oligomer and/or polymer is accomplished at least partly through one or more organic network formers of the general formula (I)
R¹ₙR²ₘR³ₒSiX₍₄₋ₙ₋ₘ₋ₒ₎ (I)
where X is a hydrolysable group after whose hydrolysis a covalent bond of organic network former to the inorganic network can be formed,
and R¹ is a reactive organic group which is covalently bondable to the organic oligomer and/or polymer,
R² and R³ independently of one another are each an organic group which may be covalently bondable to the organic oligomer and/or polymer,
with the proviso that
n, m and o are integers, with n+m+o = 1-3 and n = 1 to 3, m = 0 to 2, and o = 0 to 2,
and/or the general formula (II)
(R¹O)ₙ(R²O)ₘ(R³O)ₒMX₍ₖ₋ₙ₋ₘ₋ₒ₎ (II)
where the compound has at least one hydrolysable group X after whose hydrolysis a covalent bond of organic network former to the inorganic network can be formed, at least one organic radical R¹ which is a reactive organic group which is covalently bondable to the organic oligomer and/or polymer, and R² and R³ independently of one another may each be an organic group which may be covalently bondable to the organic oligomer and/or polymer,
where
k is the formal oxidation number of M,
M is Al, Zr or Ti,
n is an integer from 1 to (k-1),
m is an integer from 0 to (k-2),
o is an integer from 0 to (k-2), and
where n+m+o is an integer from 1 to k-1,
where R¹ is a reactive organic radical which has one or more substituents selected from the group consisting of amino, hydroxyl, thiol, epoxy, acrylate, methacrylate, vinyl, allyl, alkenyl, alkynyl, carboxyl, carboxylic anhydride, isocyanate, cyanate, ureido, and carbamate group and mixtures thereof,
and where R² and R³ are selected independently of one another from the group consisting of H-, (C₁-C₄₀)-alkyl-, (C₁-C₄₀)-fluorinated alkyl-, (C₁-C₄₀)-partially fluorinated alkyl-, (C₂-C₄₀)-alkenyl-, (C₂-C₄₀)-alkynyl-; (C₆-C₃₆)-aryl-, fluorinated (C₆-C₃₆)-aryl-, partially fluorinated (C₆-C₃₆)-aryl-, (C₇-C₄₀)-alkylaryl-, (C₇-C₄₀)-arylalkyl-, fluorinated (C₇-C₄₀)-alkylaryl-, partially fluorinated (C₇-C₄₀)-alkylaryl-, (C₈-C₄₀)-alkenylaryl-, (C₈-C₄₀)-arylalkynyl-, (C₈-C₄₀)-alkynylaryl-, (C₅-C₄₀)-cycloalkyl-, (C₆-C₄₀)-alkylcycloalkyl-, (C₆-C₄₀)-cycloalkylalkylsilanes each of which may be substituted by amino, hydroxyl, thiol, epoxy, acrylate, methacrylate, vinyl, allyl, alkenyl, alkynyl, carboxyl, carboxylic anhydride, isocyanate, cyanate, ureido, carbamate and/or ester group and may contain O, N and S as heteroatoms in the carbon chains and carbon ring systems, and mixtures thereof,
and where the organic proportion in the hybrid coating applied to the platelet-shaped substrate is within a range of from 4 to 85 % by weight relative to the weight of the total hybrid layer.

2. Pearlescent pigments according to claim 1,
**characterized in that**
the inorganic oxide component of the hybrid layer is selected from the group consisting of metal oxide, metal suboxide, metal hydroxide, metal oxide hydrate, and mixtures thereof.

3. Pearlescent pigments according to claim 2,
**characterized in that**
the inorganic oxide component of the hybrid layer is selected from metal oxide and/or metal suboxide and/or metal oxide hydrate and/or metal hydroxide of elements from the group consisting of silicon, aluminium, titanium, zirconium, iron, cerium, chromium, manganese, zinc, tin, antimony, boron and magnesium, and mixtures thereof.

4. Pearlescent pigments according to any one of claims 1 to 3,
**characterized in that**
the organic network former is a silane of the general formula (I), the hydrolysable group(s) X being selected independently of one another from the group consisting of halogen, hydroxyl, alkoxy having 1-10 C atoms, which may be straight-chain or branched, and mixtures thereof.

5. Pearlescent pigments according to any one of claims 1 to 3,
**characterized in that**
the organic network former possesses the general formula (II), the hydrolysable group(s) X being selected independently of one another from the group consisting of halogen, hydroxyl, alkoxy having 1-20 C atoms, which may be straight-chain or branched and may contain heteroatoms, preferably O, S and/or N, in the carbon chain, and mixtures thereof.

6. Pearlescent pigments according to any one of the preceding claims,
**characterized in that**
the organic oligomer and/or polymer is constructed from monomers provided with functionalities from the group consisting of amino, hydroxyl, thiol, epoxy, acrylate, methacrylate, vinyl, allyl, alkenyl, alkynyl, carboxyl, carboxylic anhydride, isocyanate, cyanate, ureido, and carbamate group and mixtures thereof.

7. Pearlescent pigments according to any one of claims 1 to 5,
**characterized in that**
the organic component is constructed from reactive organic oligomers and/or polymers which have reactive groups which are able to attach to the inorganic network and/or at least to the group R¹ of the organic network formers.

8. Pearlescent pigments according to claim 7,
**characterized in that**
the reactive organic oligomer and/or polymer is selected from the group consisting of trialkoxysilane-modified polyethyleneimines and aminosilane-modified polyethylene oxide urethanes, and mixtures thereof.

9. Pearlescent pigments according to claim 7,
**characterized in that**
the reactive organic oligomer and/or polymer is selected from the group consisting of polyacrylates, polymethacrylates, polyethers, polyesters, polyamines, polyamides, polyols, polyurethanes, and polyolefins, these oligomers and/or polymers having reactive functional groups which are able to bond to the inorganic network or an organic network former.

10. Pearlescent pigments according to any one of claims 1 to 9,
**characterized in that**
the organic oligomer and/or polymer is covalently bonded via the functional group R¹ of one or more organic network formers in the hybrid inorganic/organic layer.

11. Pearlescent pigments according to any one of claims 1 to 10,
**characterized in that**
the substrate is selected from the group consisting of pearlescent pigments, oxide-coated or mixed-oxide-coated pearlescent pigments, titanium dioxide platelets, iron oxide platelets and bismuth oxychloride pigments.

12. Pearlescent pigments according to any one of the preceding claims,
**characterized in that**
disposed between substrate and hybrid inorganic/organic layer is at least one separate, substantially purely inorganic layer and/or at least one separate layer comprising substantially purely organic polymer.

13. Pearlescent pigments according to any one of the preceding claims,
**characterized in that**
disposed on the hybrid inorganic/organic layer there is at least one separate, substantially purely inorganic layer and/or at least one separate layer comprising substantially purely organic polymer.

14. Pearlescent pigments according to claims 12 or 13,
**characterized in that**
the separate, substantially purely inorganic layers are produced from metal oxide and/or metal oxide hydrate and/or metal suboxide and/or metal hydroxide of elements selected from the group consisting of silicon, titanium, aluminium, zirconium, iron, copper, tin, cobalt, chromium, cerium, zinc, antimony, manganese, nickel, yttrium, molybdenum, vanadium, tantalum, tungsten, and mixtures thereof.

15. Pearlescent pigment according to claims 12 or 13,
**characterized in that**
the at least one separate, substantially purely organic polymer layer is selected from the group consisting of polyacrylate, polymethacrylate, polyether, polyester, polyamine, polyamide, polyol, polyurethane, polyphenol-formaldehyde, polyolefin, poly-1,2,3,4-tetrafluoroethylene, and mixtures thereof.

16. Pearlescent pigment according to any one of the preceding claims,
**characterized in that**
an additional layer with one or more surface modifiers has been applied to the surface of the coated pearlescent pigment.

17. Pearlescent pigment according to any one of the preceding claims,
**characterized in that**
the platelet-shaped substrate is selected from the group consisting of
TiO₂ and/or iron oxide coated mica platelets,
TiO₂ and/or iron oxide coated glass platelets,
TiO₂ and/or iron oxide coated aluminium oxide platelets,
TiO₂ and/or iron oxide coated SiO₂ platelets,
bismuth oxychloride platelets,
pure TiO₂ platelets, and
mixtures thereof.

18. Process for producing a pearlescent pigment with hybrid inorganic/organic layer, which comprises the following steps:
- reacting at least one inorganic network former and at least one organic network former and at least one reactive organic component in a liquid phase to form a coating composition,
- applying the coating composition to platelet-shaped transparent substrates as a hybrid layer,
the platelet-shaped transparent substrates being added to the liquid phase before, during or after the addition or reaction of the at least one inorganic network former and of the at least one organic network former and of the at least one reactive organic component, the hybrid layer having at least partly an inorganic network that has one or more inorganic oxide components, and having at least one organic component, the organic component at least partly being an organic oligomer and/or polymer which is covalently bonded at least partly to the inorganic network,
where the at least one organic network former has the general formula (I)
R¹ₙR²ₘR³ₒSiX(₄₋ₙ₋ₘ₋ₒ) (I)
where X is a hydrolysable group after whose hydrolysis a covalent bond of organic network former to the inorganic network can be formed,
and R¹ is a reactive organic group which is covalently bondable to an organic oligomer and/or polymer,
R² and R³ independently of one another are each an organic group which may be covalently bondable to an organic oligomer and/or polymer,
with the proviso that
n, m and o are integers, with n+m+o = 1-3 and n = 1 to 3, m = 0 to 2, and o = 0 to 2,
and/or the at least one organic network former has the general formula (II)
(R¹O)ₙ(R²O)ₘ(R³O)ₒMX₍ₖ₋ₙ₋ₘ₋ₒ₎ (II)
where the organometallic compound has at least one hydrolysable group X after whose hydrolysis a covalent bond of organic network former to the inorganic network can be formed, at least one organic radical R¹ which is a reactive organic group which is covalently bondable to an organic oligomer and/or polymer, and R² and R³ independently of one another may each be an organic group which may be covalently bondable to an organic oligomer and/or polymer, where
k is the formal oxidation number of M,
M is Al, Zr or Ti,
n is an integer from 1 to (k-1),
m is an integer from 0 to (k-2),
o is an integer from 0 to (k-2), and
where n+m+o is an integer from 1 to k-1,
and where R¹ is a reactive organic radical which has one or more substituents selected from the group consisting of amino, hydroxyl, thiol, epoxy, acrylate, methacrylate, vinyl, allyl, alkenyl, alkynyl, carboxyl, carboxylic anhydride, isocyanate, cyanate, ureido, and carbamate group and mixtures thereof,
and where R² and R³ are selected independently of one another from the group consisting of H-, (C₁-C₄₀)-alkyl-, (C₁-C₄₀)-fluorinated alkyl-, (C₁-C₄₀)-partially fluorinated alkyl-, (C₂-C₄₀)-alkenyl-, (C₂-C₄₀)-alkynyl-; (C₆-C₃₆)-aryl-, fluorinated (C₆-C₃₆)-aryl-, partially fluorinated (C₆-C₃₆)-aryl-, (C₇-C₄₀)-alkylaryl-, (C₇-C₄₀)-arylalkyl-, fluorinated (C₇-C₄₀)-alkylaryl-, partially fluorinated (C₇-C₄₀)-alkylaryl-; (C₈-C₄₀)-alkenylaryl-, (C₈-C₄₀)-arylalkynyl-, (C₈-C₄₀)-alkynylaryl-, (C₅-C₄₀)-cycloalkyl-, (C₆-C₄₀)-alkylcycloalkyl-, (C₆-C₄₀)-cycloalkylalkylsilanes each of which may be substituted by amino, hydroxyl, thiol, epoxy, acrylate, methacrylate, vinyl, allyl, alkenyl, alkynyl, carboxyl, carboxylic anhydride, isocyanate, cyanate, ureido, carbamate and/or ester group and may contain O, N and S as heteroatoms in the carbon chains and carbon ring systems, and mixtures thereof,
and where the organic proportion in the hybrid layer applied to the platelet-shaped substrate is within a range of from 4 to 85 % by weight relative to the weight of the total hybrid layer.

19. Process for producing a pearlescent pigment according to claim 18, which comprises the following steps:
(a) providing a reaction mixture of platelet-shaped transparent substrates in a liquid phase,
(b1) adding at least one inorganic network former to the reaction mixture from step (a),
(c1) hydrolysing and/or condensing the inorganic network former added in step (b1),
(d1) adding at least one reactive organic network former and at least one reactive organic component before, during and/or after the hydrolysis and/or condensation of step (c1),
or
(b2) adding at least one reactive organic network former and at least one reactive organic component to the reaction mixture from step (a),
(c2) adding at least one inorganic network former to the reaction mixture from step (b2),
(d2) hydrolysing and/or condensing the inorganic network former added in step (c2),
and
(e) reacting hydrolysed and/or condensed inorganic network former with the reactive organic network former and also with the reactive organic component, with simultaneous and/or subsequent deposition of the hybrid inorganic/organic layer,
(f) optionally separating the platelet-shaped substrates coated in step (e) from the reaction mixture.

20. Process according to claim 18 or 19,
**characterized in that**
the reactive organic component is added in the form of reactive polymerizable organic monomers, oligomers and/or polymers.

21. Process according to claim 19,
**characterized in that**
at least one reactive oligomer and/or polymer is added as reactive organic component.

22. Process according to any one of claims 18 to 21,
**characterized in that**
the inorganic oxide component of the hybrid layer is selected from the group consisting of metal oxide, metal oxide hydrate, metal suboxide, metal hydroxide, and mixtures thereof.

23. Process according to any one of claims 18 to 22,
**characterized in that**
the inorganic oxide component of the hybrid layer is selected from metal oxide and/or metal oxide hydrate and/or metal suboxide and/or metal hydroxide of elements from the group consisting of silicon, aluminium, titanium, zirconium, iron, cerium, chromium, manganese, zinc, antimony, boron and magnesium, and mixtures thereof.

24. Process according to any one of claims 18 to 23,
**characterized in that**
the organic network former is a silane of the general formula (I), the hydrolysable group(s) X being selected independently of one another from the group consisting of halogen, hydroxyl, alkoxy having 1-10 C atoms, which may be straight-chain or branched, and mixtures thereof.

25. Process according to any one of claims 18 to 23,
**characterized in that**
the organic network former possesses the general formula (II), the hydrolysable group(s) X being selected independently of one another from the group consisting of halogen, hydroxyl, alkoxy having 1-20 C atoms, which may be straight-chain or branched and may contain heteroatoms, preferably O, S and/or N, in the carbon chain, and mixtures thereof.

26. Process according to any one of claims 21 to 25,
**characterized in that**
the reactive organic oligomer and/or polymer is constructed from reactive monomers provided with functionalities from the group consisting of amino, hydroxyl, thiol, epoxy, acrylate, methacrylate, vinyl, allyl, alkenyl, alkynyl, carboxyl, carboxylic anhydride, isocyanate, cyanate, ureido, and carbamate group and mixtures thereof.

27. Process according to any one of claims 21 to 25,
**characterized in that**
the reactive oligomer and/or polymer is selected from the group consisting of polyacrylates, polymethacrylates, polyethers, polyesters, polyamines, polyamides, polyols, polyurethanes, polyolefins, and mixtures thereof, and for activation is optionally reacted with an organic network former prior to the addition to the reaction mixture.

28. Process according to any one of claims 18 to 27,
**characterized in that**
the reactive organic component prior to addition is formed by reacting one or more different organic network formers with reactive groups R¹ with one another, optionally with addition of polymerization initiators, and subsequently carrying out addition.

29. Process according to claim 21,
**characterized in that**
the reactive organic oligomer and/or polymer is selected from the group consisting of trialkoxysilane-modified polyethyleneimines and aminosilane-modified polyethylene oxide urethanes.

30. Process according to claim 21,
**characterized in that**
the reactive organic oligomer and/or polymer is selected from the group consisting of polyacrylates, polymethacrylates, polyethers, polyesters, polyamines, polyamides, polyols, polyurethanes and polyolefins, these oligomers and/or polymers possessing reactive functions.

31. Process according to any one of claims 18 to 30,
**characterized in that**,
before, during and/or after the addition of the reactive organic network former, additionally at least one organic network modifier is added.

32. Process according to any one of claims 18 to 31,
**characterized in that**,
before the hybrid inorganic/organic layer is applied to the platelet-shaped substrate, one or more substantially purely inorganic and/or substantially purely organic layers are applied.

33. Process according to any one of claims 18 to 32,
**characterized in that**,
after the hybrid inorganic/organic layer is applied, one or more substantially purely inorganic and/or substantially purely organic layers are applied.

34. Process according to any one of claims 18 to 33,
**characterized in that**
the outermost layer applied is a layer with one or more surface modifiers.

35. Process according to any one of claims 18 to 34,
**characterized in that**
aqueous and/or alcoholic solutions or solvent mixtures are used as reaction medium.

36. Process according to any one of claims 19 to 35,
**characterized in that**
the reaction temperature in steps (b) to (e) lies in a range from about 0°C to about 100°C, preferably from about 10°C to about 80°C.

37. Process according to any one of claims 19 to 36,
**characterized in that**
the pH in steps (b) to (e) lies in a range from 1.5 to 12, preferably from 6 to 10.

38. Use of the platelet-shaped pearlescent pigment according to any one of Claims 1 to 17 in varnishes, paints, printing inks, powder coating materials, architectural coatings, plastics, security printing inks, ceramics, glass or cosmetic preparations.

39. Use of a platelet-shaped pearlescent pigment according to any one of Claims 1 to 17 as a laser marker.

## Revendications

1. Pigments à lustre nacré présentant un revêtement comprenant un substrat transparent plaquettaire, **caractérisé en ce que** le revêtement comprend au moins une couche mixte anorganique / organique, la couche mixte présentant au moins partiellement un réseau anorganique qui présente un ou plusieurs composant(s) d'oxyde anorganique et au moins un composant organique, le composant organique étant un oligomère et/ou polymère organique qui est lié de façon covalente au moins en partie avec le réseau anorganique par un ou plusieurs agents de réticulation, la liaison covalente au moins partielle de composants d'oxyde anorganique et d'oligomère et/ou polymère organique s'effectuant au moins en partie par un ou plusieurs agents de réticulation organiques qui présentent la formule générale (I)
R¹ₙR²ₘR³ₒSiX (₄₋ₙ₋ₘ₋ₒ) (I)
X étant un groupe hydrolysable après l'hydrolyse duquel une liaison covalente d'agents de réticulation organique peut être formée avec le réseau anorganique,
et R¹ désignant un groupe organique réactif qui peut être lié de façon covalente avec l'oligomère et/ou polymère organique,
R² et R³ étant indépendamment l'un de l'autre, respectivement un groupe organique, qui peuvent être liés de façon covalente avec l'oligomère et/ou le polymère organique,
à condition que
n, m et o soient des nombres entiers, sachant que n+m+o = 1-3 et n = 1 à 3, m = 0 à 2 et o = 0 à 2,
et/ou la formule générale (II)
(R¹O)ₙ(R²O)ₘ(R³O)ₒMX₍ₖ₋ₙ₋ₘ₋ₒ₎ (II)
la liaison pouvant être au moins un groupe X hydrolysable après l'hydrolyse duquel, une liaison covalente de l'agent de réticulation organique peut être formée avec le réseau anorganique, au moins un radical organique R¹ qui désigne un groupe organique réactif qui peut être lié de façon covalente avec l'oligomère et/ou le polymère organique et R² et R³ pouvant être indépendamment l'un de l'autre, respectivement, un groupe organique, qui peuvent être liés de façon covalente avec l'oligomère organique et/ou polymère,
k étant l'indice d'oxydation formel de M,
M étant Al, Zr ou Ti,
n étant un nombre entier de 1 à (k-1) m étant un nombre entier de 0 à (k-2),
o étant un nombre entier de 0 à (k-2), et
n+m+o étant un nombre entier de 1 à k-1,
R¹ étant un radical organique réactif qui présente un ou plusieurs substituants qui sont choisis dans le groupe comprenant les groupes amino, hydroxy, thiol, époxy, acrylate, méthacrylate, vinyle, allyle, alcényle, alcinyle, carboxy, carboxylanhydride, isocyanate, cyanate, uréido, carbamate et leurs mélanges et
R² et R³ étant choisis indépendamment dans le groupe comprenant H-, un groupe alkyle (en C₁ à C₄₀), alkyle fluoré (en C₁ à C₄₀), alkyle partiellement fluoré (en C₁ à C₄₀) ; alcényle (en C₂ à C₄₀), alcinyle (en C₂ à C₄₀), aryle (en C₆ à C₃₆), aryle fluoré (en C₆ à C₃₆), aryle partiellement fluoré (en C₆ à C₃₆) ; alkylaryle (en C₇ à C₄₀), arylalkyle (en C₇ à C₄₀), alkylaryle fluoré (en C₇ à C₄₀), alkylaryle partiellement fluoré (en C₇ à C₄₀) ; alcénylaryle (en C₆ à C₄₀), arylalcinyle (en C₈ à C₄₀) ; alkinylaryle (en C₈ à C₄₀) ; cycloalkyle (en C₅ à C₄₀), alkylcycloalkyle (en C₆ à C₄₀), cycloalkylalkylsilane (en C₆ à C₄₀) qui sont substitués respectivement par des groupes amino, hydroxy, thiol, époxy, acrylate, méthacrylate, vinyle, allyle, alcényle, alcinyle, carboxy, carboxylanhydride, isocyanate, cyanate, uréido, carbamate et/ou ester et dans les chaînes de carbone et les systèmes cycliques du carbone, O, N et S peuvent être contenus en tant qu'hétéroatomes, et leurs mélanges, et
la fraction organique de la couche mixte appliquée sur le substrat plaquettaire se situant dans une plage de 4 à 85 % en poids par rapport au poids de la couche mixte totale.

2. Pigments à lustre nacré selon la revendication 1,
**caractérisés en ce**
**que** les composants d'oxyde anorganique de la couche mixte sont choisis dans le groupe comprenant l'oxyde métallique, le suboxyde métallique, l'hydroxyde métallique, l'hydrate d'oxyde métallique et leurs mélanges.

3. Pigments à lustre nacré selon la revendication 2,
**caractérisés en ce**
**que** les composants d'oxyde anorganique de la couche mixte sont choisis parmi l'oxyde métallique et/ou le suboxyde métallique et/ou l'hydrate d'oxyde métallique et/ou l'hydroxyde métallique d'éléments du groupe comprenant le silicium, l'aluminium, le titane, le zirconium, le fer, le cérium, le chrome, le manganèse, le zinc, l'étain, l'antimoine, le bore et le magnésium et leurs mélanges.

4. Pigments à lustre nacré selon l'une quelconque des revendications 1 à 3,
**caractérisés en ce**
**que** l'agent de réticulation organique est un silane selon la formule générale (I), le/les groupe(s) hydrolysable(s) pouvant être indépendamment l'un de l'autre choisis dans le groupe comprenant un atome d'halogène, un groupe hydroxy, alcoxy comportant 1 à 10 atomes de carbone qui peuvent être à chaîne linéaire ou ramifiée, et leurs mélanges.

5. Pigments à lustre nacré selon l'une quelconque des revendications 1 à 3,
**caractérisés en ce**
**que** l'agent de réticulation organique possède la formule générale (II), le/les groupe(s) hydrolysable(s) étant choisis indépendamment dans le groupe comprenant un atome d'halogène, un groupe hydroxy, alcoxy comportant 1 à 20 atomes de carbone, qui peuvent être à chaîne linéaire ou ramifiée, et des hétéroatomes, de préférence O, S et/ou N dans la chaîne de carbone, et leurs mélanges.

6. Pigments à lustre nacré selon l'une quelconque des revendications précédentes,
**caractérisés en ce**
**que** l'oligomère et/ou le polymère organique est constitué de monomères présentant les fonctionnalités choisies dans le groupe comprenant les groupes amino, hydroxy, thiol, époxy, acrylate, méthacrylate, vinyle, allyle, alcényle, alcinyle, carboxy, carboxylanhydride, isocyanate, cyanate, uréido et carbamate et leurs mélanges.

7. Pigments à lustre nacré selon l'une quelconque des revendications 1 à 5,
**caractérisés en ce**
**que** les composants organiques sont constitués d'oligomères et/ou de polymères organiques réactifs qui présentent des groupes pouvant réagir qui peuvent être liés au réseau anorganique et/ou au moins au groupe R¹ des réseaux organiques.

8. Pigments à lustre nacré selon la revendication 7,
**caractérisés en ce**
**que** l'oligomère et/ou le polymère organique réactif est choisi dans le groupe comprenant des polyéthylène-imines modifiées par trialcoxysilane et des polyéthylène-oxyde-uréthanes modifiés par aminosilane et leurs mélanges.

9. Pigments à lustre nacré selon la revendication 7,
**caractérisés en ce**
**que** l'oligomère et/ou le polymère organique réactif est choisi dans le groupe comprenant des polyacrylates, polyméthacrylates, polyéthers, polyesters, polyamines, polyamides, polyols, polyuréthanes et polyoléfines, ces oligomères et/ou polymères présentant des groupes fonctionnels réactifs qui peuvent se lier au réseau anorganique ou à un agent de réticulation organique.

10. Pigments à lustre nacré selon l'une quelconque des revendications 1 à 9,
**caractérisés en ce**
**que** l'oligomère et/ou le polymère organique est lié de façon covalente par le groupe fonctionnel R¹ d'un ou plusieurs agents de réticulation organique dans la couche mixte anorganique / organique.

11. Pigments à lustre nacré selon l'une quelconque des revendications 1 à 10,
**caractérisés en ce**
**que** le substrat est choisi dans le groupe des pigments à lustre nacré, des pigments à lustre nacré revêtus d'oxydes ou d'oxydes mixtes, des plaquettes de dioxyde de titane, des plaquettes d'oxyde de fer et des pigments d'oxychlorure de bismuth.

12. Pigments à lustre nacré selon l'une quelconque des revendications précédentes,
**caractérisés en ce**
**qu'**entre le substrat et la couche mixte anorganique/organique est disposée au moins une couche séparée essentiellement purement anorganique et/ou au moins une couche séparée constituée essentiellement d'un polymère purement organique.

13. Pigments à lustre nacré selon l'une quelconque des revendications précédentes,
**caractérisés en ce**
**que** sur la couche mixte anorganique / organique est disposée au moins une couche séparée essentiellement purement anorganique et/ou au moins une couche séparée constituée d'un polymère essentiellement purement organique.

14. Pigments à lustre nacré selon les revendications 12 ou 13,
**caractérisés en ce**
**que** les couches séparées essentiellement purement anorganiques sont produites à partir d'oxydes métalliques et/ou d'hydrate d'oxydes métalliques et/ou de suboxydes métalliques et/ou d'hydroxydes métalliques d'éléments choisis dans le groupe comprenant le silicium, le titane, l'aluminium, le zirconium, le fer, le cuivre, l'étain, le cobalt, le chrome, le cérium, le zinc, l'antimoine, le manganèse, le nickel, l'yttrium, le molybdène, le vanadium, le tantale, le wolfram et leurs mélanges.

15. Pigments à lustre nacré selon les revendications 12 ou 13,
**caractérisés en ce**
**qu'**au moins une couche polymère séparée essentiellement purement organique est choisie dans le groupe comprenant le polyacrylate, le polyméthacrylate, le polyéther, le polyester, la polyamine, le polyamide, le polyol, le polyuréthane, le polyphénolformaldéhyde, la polyoléfine, le poly-1,2,3,4-tétrafluoroéthylène et leurs mélanges.

16. Pigments à lustre nacré selon l'une quelconque des revendications précédentes, **caractérisés en ce que** sur la surface du pigment à lustre nacré revêtu est appliquée en outre une couche comprenant un ou plusieurs agents de modification de surface.

17. Pigments à lustre nacré selon l'une quelconque des revendications précédentes,
**caractérisés en ce**
**que** le substrat plaquettaire est choisi dans le groupe comprenant
des plaquettes de mica revêtues de TiO₂ et/ou d'oxyde de fer,
des plaquettes de verre revêtues de TiO₂ et/ou d'oxyde de fer,
des plaquettes d'oxyde d'aluminium revêtues de TiO₂ et/ou d'oxyde de fer,
des plaquettes de SiO₂ revêtues de TiO₂ et/ou d'oxyde de fer,
des plaquettes d'oxychlorure de bismuth,
des plaquettes de TiO₂ pures et
leurs mélanges.

18. Procédé de fabrication d'un pigment à lustre nacré avec une couche mixte anorganique / organique qui comprend les étapes suivantes :
- conversion d'au moins un agent de réticulation anorganique et au moins d'un agent de réticulation organique et au moins d'un composant réactif organique dans une phase liquide en formant une composition de revêtement,
- application de la composition de revêtement sur des substrats transparents plaquettaires comme couche mixte,
les substrats métalliques plaquettaires étant ajoutés avant, pendant ou après l'addition ou la conversion d'au moins un agent de réticulation anorganique et d'au moins un agent de réticulation organique et d'au moins un composant organique réactif à la phase liquide,
la couche mixte présentant au moins en partie un réseau anorganique qui présente un ou plusieurs composant(s) anorganique(s) et au moins un composant organique, les composants organiques étant au moins en partie un oligomère et/ou un polymère organique qui est lié de façon covalente au moins partiellement au réseau anorganique,
au moins un agent de réticulation organique présentant la formule générale (I)
R¹ₙR²ₘR³ₒSiX (₄₋ₙ₋ₘ₋ₒ) (I)
X étant un groupe hydrolysable après l'hydrolyse duquel une liaison covalente d'agents de réticulation organique peut être formée avec le réseau anorganique,
et R¹ désignant un groupe organique réactif qui peut être lié de façon covalente avec l'oligomère et/ou polymère organique,
R² et R³ étant indépendamment l'un de l'autre, respectivement un groupe organique, qui peuvent être liés de façon covalente avec l'oligomère et/ou le polymère organique,
à condition que
n, m et o soient des nombres entiers, sachant que n+m+o = 1-3 et n = 1 à 3, m = 0 à 2 et o = 0 à 2,
et/ou l'agent de réticulation organique présente la formule générale (II)
(R¹O)ₙ(R²O)m(R³O)ₒMX (ₖ₋ₙ₋ₘ₋ₒ) (II)
la liaison organométallique pouvant être au moins un groupe X hydrolysable après l'hydrolyse duquel, une liaison covalente de l'agent de réticulation organique peut être formée avec le réseau anorganique, au moins un radical organique R¹ qui désigne un groupe organique réactif qui peut être lié de façon covalente avec l'oligomère et/ou le polymère organique et R² et R³ pouvant être indépendamment l'un de l'autre, respectivement, un groupe organique, qui peuvent être liés de façon covalente avec l'oligomère organique et/ou polymère,
k étant l'indice d'oxydation formel de M,
M étant Al, Zr ou Ti,
n étant un nombre entier de 1 à (k-1),
m étant un nombre entier de 0 à (k-2),
o étant un nombre entier de 0 à (k-2), et n+m+o étant un nombre entier de 1 à k-1 et
R¹ étant un radical organique réactif qui présente un ou plusieurs substituants qui sont choisis dans le groupe comprenant les groupes amino, hydroxy, thiol, époxy, acrylate, méthacrylate, vinyle, allyle, alcényle, alcinyle, carboxy, carboxylanhydride, isocyanate, cyanate, uréido, carbamate et leurs mélanges et
R² et R³ étant choisis indépendamment dans le groupe comprenant H-, un groupe alkyle (en C₁ à C₄₀), alkyle fluoré (en C₁ à C₄₀), alkyle partiellement fluoré (en C₁ à C₄₀) ; alcényle (en C₂ à C₄₀), alcinyle (en C₂ à C₄₀), aryle (en C₆ à C₃₆), aryle fluoré (en C₆ à C₃₆), aryle partiellement fluoré (en C₆ à C₃₆) ; alkylaryle (en C₇ à C₄₀), arylalkyle (en C₇ à C₄₀), alkylaryle fluoré (en C₇ à C₄₀), alkylaryle partiellement fluoré (en C₇ à C₄₀) ; alcénylaryle (en C₆ à C₄₀), arylalcinyle (en C₈ à C₄₀) ; alkinylaryle (en C₆ à C₄₀) ; cycloalkyle (en C₅ à C₄₀), alkylcycloalkyle (en C₆ à C₄₀), cycloalkylalkylsilane (en C₆ à C₄₀) qui sont substitués respectivement par des groupes amino, hydroxy, thiol, époxy, acrylate, méthacrylate, vinyle, allyle, alcényle, alcinyle, carboxy, carboxylanhydride, isocyanate, cyanate, uréido, carbamate et/ou ester et dans les chaînes de carbone et les systèmes cycliques du carbone, O, N et S peuvent être contenus en tant qu'hétéroatomes, et leurs mélanges et
la fraction organique de la couche mixte appliquée sur le substrat plaquettaire se situant dans une plage de 4 à 95 % en poids par rapport au poids de la couche mixte totale.

19. Procédé de fabrication d'un pigment à lustre nacré selon la revendication 18 qui comprend les étapes suivantes :
(a) la mise à disposition d'un mélange réactionnel de substrats transparents plaquettaires dans une phase liquide,
(b1) l'addition d'au moins un agent de réticulation anorganique à un mélange réactionnel de l'étape (a),
(c1) l'hydrolyse et/ou la condensation de l'agent de réticulation anorganique ajouté à l'étape (b1),
(d1) l'addition d'au moins un agent de réticulation organique réactif et d'au moins un composant organique réactif, pendant et/ou après l'hydrolyse et/ou la condensation de l'étape (c1)
ou
(b2) l'addition d'au moins un agent de réticulation organique réactif et au moins d'un composant organique réactif au mélange réactionnel de l'étape (a) ;
(c2) l'addition d'au moins un agent de réticulation anorganique au mélange réactionnel de l'étape (b2),
(d2) l'hydrolyse et/ou la condensation de l'agent de réticulation anorganique ajouté à l'étape (c2),
et
(e) la conversion de l'agent de réticulation anorganique hydrolysé et/ou condensé avec l'agent de réticulation organique réactif et du composant organique réactif par dépôt concomitant et/ou consécutif de la couche mixte anorganique/organique,
(f) la séparation éventuelle du substrat plaquettaire revêtu à l'étape (e) du mélange réactionnel.

20. Procédé selon la revendication 18 ou 19,
**caractérisé en ce**
**que** le composant organique réactif est ajouté sous la forme de monomères, oligomères et/ou polymères organiques polymérisables réactifs.

21. Procédé selon la revendication 19,
**caractérisé en ce**
**que** l' on ajoute comme composant organique réactif au moins un oligomère et/ou un polymère réactif.

22. Procédé selon l'une quelconque des revendications 18 à 21,
**caractérisé en ce**
**que** les composants d'oxyde anorganiques de la couche mixte sont choisis dans le groupe comprenant l'oxyde métallique, l'hydrate d'oxyde métallique, le suboxyde métallique, l'hydroxyde métallique et leurs mélanges.

23. Procédé selon l'une quelconque des revendications 18 à 22,
**caractérisé en ce**
**que** les composants d'oxyde anorganiques de la couche mixte sont choisis dans le groupe comprenant l'oxyde métallique et/ou l'hydrate d'oxyde métallique et/ou le suboxyde métallique et/ou l'hydroxyde métallique d'éléments du groupe comprenant le silicium, l'aluminium, le titane, le zirconium, le fer, le cérium, le chrome, le manganèse, le zinc, l'étain, l'antimoine, le bore et le magnésium et leurs mélanges.

24. Procédé selon l'une quelconque des revendications 18 à 23,
**caractérisé en ce**
**que** l'agent de réticulation organique est un silane selon la formule générale (I), le/les groupe(s) hydrolysable(s) pouvant être indépendamment l'un de l'autre choisis dans le groupe comprenant un atome d'halogène, un groupe hydroxy, alcoxy comportant 1 à 10 atomes de carbone qui peuvent être à chaîne linéaire ou ramifiée et leurs mélanges.

25. Procédé selon l'une quelconque des revendications 18 à 23,
**caractérisé en ce**
**que** l'agent de réticulation organique possède la formule générale (II), le/les groupe(s) hydrolysable(s) étant choisis indépendamment dans le groupe comprenant un atome d'halogène, un groupe hydroxy, alcoxy comportant 1 à 20 atomes de carbone, qui peuvent être à chaîne linéaire ou ramifiée, et des hétéroatomes, de préférence O, S et/ou N dans la chaîne de carbone, et leurs mélanges.

26. Procédé selon l'une quelconque des revendications 21 à 25,
**caractérisé en ce**
**que** l'oligomère et/ou le polymère organique est constitué de monomères présentant les fonctionnalités choisies dans le groupe comprenant les groupes amino, hydroxy, thiol, époxy, acrylate, méthacrylate, vinyle, allyle, alcényle, alcinyle, carboxy, carboxylanhydride, isocyanate, cyanate, uréido et carbamate et leurs mélanges.

27. Procédé selon l'une quelconque des revendications 21 à 25,
**caractérisé en ce**
**que** l'oligomère et/ou le polymère organique réactif est choisi dans le groupe comprenant des polyacrylates, polyméthacrylates, polyéthers, polyesters, polyamines, polyamides, polyols, polyuréthanes et polyoléfines et leurs mélanges, et éventuellement étant convertis pour activation avant l'addition dans le mélange réactionnel avec un agent de réticulation organique.

28. Procédé selon l'une quelconque des revendications 18 à 27,
**caractérisé en ce**
**que** le composant organique réactif est formé avant l'addition, en convertissant un ou plusieurs agents de réticulation organiques avec des groupes R¹ réactifs, éventuellement en ajoutant des initiateurs de polymérisation, et ensuite sont ajoutés.

29. Procédé selon la revendication 21,
**caractérisé en ce**
**que** l'oligomère et/ou le polymère organique réactif est choisi dans le groupe comprenant les polyéthylène-imines modifiées par trialcoxysilane et les polyéthylène-oxyde-uréthanes modifiés par aminosilane.

30. Procédé selon la revendication 21,
**caractérisé en ce**
**que** l'oligomère et/ou le polymère organique réactif est choisi dans le groupe comprenant les polyacrylates, polyméthacrylates, polyéthers, polyesters, polyamines, polyamides, polyols, polyuréthanes et polyoléfines, ces oligomères et/ou polymères disposant de fonctions réactives.

31. Procédé selon l'une quelconque des revendications 18 à 30,
**caractérisé en ce**
**que**, avant, pendant et/ou après l'addition de l'agent de réticulation organique réactif, on ajoute au moins en outre un convertisseur de réticulation organique.

32. Procédé selon l'une quelconque des revendications 18 à 31,
**caractérisé en ce**
**que**, avant l'application de la couche mixte anorganique / organique, on applique sur le substrat plaquettaire, une ou plusieurs couches essentiellement purement anorganiques et/ou essentiellement purement organiques.

33. Procédé selon l'une quelconque des revendications 18 à 32,
**caractérisé en ce**
**qu'**après l'application de la couche mixte anorganique / organique, on applique une ou plusieurs couches essentiellement purement anorganiques et/ou essentiellement purement organiques.

34. Procédé selon l'une quelconque des revendications 18 à 33,
**caractérisé en ce**
**que** l'on applique comme couche la plus extérieure, une couche présentant un ou plusieurs agents de modification de surface.

35. Procédé selon l'une quelconque des revendications 18 à 34,
**caractérisé en ce**
**que** l'on utilise comme milieu réactionnel, des solutions aqueuses et/ou alcooliques et/ou des mélanges de solvants.

36. Procédé selon l'une quelconque des revendications 19 à 35,
**caractérisé en ce**
**que** la température réactionnelle lors des étapes (b) à (e) se situe dans une plage d'environ 0 °C à environ 100 °C, de préférence d'environ 10 °C à environ 80 °C.

37. Procédé selon l'une quelconque des revendications 19 à 36,
**caractérisé en ce**
**que** le pH lors des étapes (b) à (e) se situe dans une plage de 1,5 à 12, de préférence de 6 à 10.

38. Utilisation du pigment à lustre nacré plaquettaire selon l'une quelconque des revendications 1 à 17 dans les vernis, peintures, encres d'impression, vernis en poudre, peintures pour bâtiments, plastiques, encres d'impression de sécurité, céramique, verre ou préparations cosmétiques.

39. Utilisation d'un pigment à lustre nacré plaquettaire selon l'une quelconque des revendications 1 à 17, comme marqueur laser.
